# EUROPEAN PATENT APPLICATION

(11) **EP 2 770 677 A1**
(43) Date of publication of application: **27.08.2014**
(21) Application number: 12841540.3
(22) Date of filing: 12.10.2012
(51) Int. Cl.: H04L 12/70, H04W 84/22

(54) **RECEPTION APPARATUS AND METHOD, PROGRAM, AND INFORMATION PROCESSING SYSTEM**

(30) Priority: 21.10.2011 JP 2011231926
(71) Applicant: Sony Corporation, Tokyo 108-0075 (JP)
(72) Inventor: YAMAGISHI Yasuaki, Tokyo 108-0075 (JP); HASHIMOTO Katsunori, Tokyo 108-0075 (JP)
(74) Representative: Witte, Weller & Partner Patentanwälte mbB
(86) International application number: PCT/JP2012/076384
(87) International publication number: WO 2013/058172

(57) **Abstract**

The present technology relates to a reception device and method, a program, and an information processing system which can securely provide path information capable of equalizing a burden of a usage fee for a connection service to an external network.

A reception unit receives path information, which is transmitted over a broadcast network, for selecting a path of an internal network according to an amount of passing packets by a packet communication process in an external connection reception device among the plurality of reception devices, a control unit selects the path at the time of connection to the external network, based on the received path information, and a communication unit performs communication by being connected to the external network through an external connection reception device according to the amount of passing packets, along the selected path. The present technology can be applied to, for example, a television receiver which receiving digital television broadcast signals.

## Description

### Technical Field

The present technology relates to a reception device and method, a program, and an information processing system, and more particularly, relates to a reception device and method, a program, and an information processing system which are adapted to equalize a burden of a usage fee for a connection service to an external network.

### Background Art

In recent years, with the spread of wireless communication such as Wireless Fidelity (WiFi), a technology regarding wireless communication such as a mesh network and an ad hoc network has attracted attention.

Here, the mesh network is a network shaped into a mesh of a net by terminal devices having wireless communication functions communicating with each other. Further, the ad hoc network is a network configured of only terminal devices capable of performing wireless communication without needing an access point. In addition, the mesh network can be regarded as a kind of ad hoc network.

Since there is a risk that an unauthorized terminal device is interposed, a risk of eavesdropping, or the like in the case of performing wireless communication by the networks, it is necessary to establish secure wireless communication between respective terminal devices constituting the networks (see, for example, PTL 1).

Further, since the terminal devices are connected to the Internet through an access point provided by the Internet service provider in the case where terminal devices constituting the networks are connected to the Internet, a billing according to a connection mode is performed. As a billing method in the ad hoc network or the mesh network, for example, PTL 2 is known. In PTL 2, a billing method is described in which packet relaying information at the time when a relay device constituting the ad hoc network performs a relay process is recorded, and a billing of the user is equalized based on the packet relaying information.

### Citation List

### Patent Literature

PTL 1: Japanese Unexamined Patent Application Publication No. 2006-246219
PTL 2: Japanese Unexamined Patent Application Publication No. 2006-245928

### Summary of Invention

### Technical Problem

In this manner, in a configuration in which a plurality of terminal devices constituting a mesh network or an ad hoc network are connected to the Internet, a fairness of burden of usage fees for an internet connection service for users using respective terminal devices is desired. Further, in order to perform secure wireless communication between respective terminal devices, it is necessary to securely provide path information indicating a communication path between respective terminal devices.

However, at present, a technical method for realizing a secure provision of path information for each device and the fairness of burden of usage fees for a connection service of the Internet has not been established.

The present technology has been made in view of such a situation, in a configuration in which a plurality of terminal devices constituting an internal network such as a mesh network are connected to an external network such as the Internet, it is intended to securely provide path information capable of equalizing burdens of usage fees of a connection service to the external network. Solution to Problem

A reception device according to a first aspect of the present technology, each of a plurality of the reception devices being connected by an internal network, includes a reception unit that receives path information, which is transmitted over a broadcast network, for selecting a path of the internal network according to an amount of passing packets by a packet communication process in an external connection reception device which is connectable to an external network among the plurality of reception devices; a selection unit that selects the path at the time of connection to the external network, based on the received path information; and a communication unit that performs communication by being connected to the external network through an external connection reception device according to the amount of passing packets, along the selected path.

The selection unit selects the path passing through an external connection reception device having the smallest amount of passing packets, among the plurality of the external connection reception devices, based on the received path information.

The path information includes information of a total amount of passing packets regarding the total amount of passing packets for respective external connection reception devices by the packet communication process.

When the reception device is the external connection reception device, the communication unit transmits the information of the total amount of its own passing packets, over the external network, to an information processing device which manages the information of the total amount of passing packets for respective external connection reception devices.

The reception unit receives the path information which is transmitted over the broadcast network based on the information of the total amount of passing packets which is managed in the information processing device.

When the reception device is not the external connection reception device, the communication unit transmits the information of the total amount of its own passing packets to the information processing device over the external connection reception device over the external network at each predetermined period, and the information processing device determines a usage fee for the external network for the reception device, based on the information of the total amount of passing packets of the external connection reception device and the reception device.

The reception unit receives a first secret key, which is transmitted over the broadcast network on a regular basis, for encrypting communication performed between the plurality of reception devices which are connected to the internal network, and the communication unit encrypts communication with another reception device connected to the internal network, using the received first secret key.

The first secret key is encrypted by a common key encryption scheme, and the communication unit encrypts communication with another reception device, using the first secret key obtained through decryption by a second secret key which is used in encryption of the first secret key.

The reception unit receives AV content which is transmitted over the broadcast network.

The internal network is a mesh network or an ad hoc network, and the external network is the Internet.

A network means a mechanism in which at least two devices are connected, and information can be transmitted from one device to another device. The devices which perform communication over a network may be individual devices or may be internal blocks constituting a single device.

Further, communication may be, of course, wireless communication or wired communication, and may be communication in which wireless communication and wired communication are mixed, in other words, wireless communication is performed in a certain interval and wired communication is performed in other intervals. Further, wired communication may be performed as communication from one device to another device and wireless communication may be performed as communication from another device to one device.

Further, the reception device may be an independent device or may be internal blocks constituting a single device.

A reception method and a program according to the first aspect of the present technology are a reception method and a program corresponding to the reception device of the first aspect of the present technology, which is described above.

In the reception device and method, and the program according to the first aspect of the present technology, path information, which is transmitted over a broadcast network, for selecting a path of the internal network according to an amount of passing packets by a packet communication process in an external connection reception device which is connectable to an external network among the plurality of reception devices is received, the path at the time of connection to the external network is selected based on the received path information, and communication is performed by being connected to the external network through an external connection reception device according to the amount of passing packets, along the selected path.

An information processing system according to a second aspect of the present technology includes a plurality of reception devices connected by an internal network, an external connection reception device which is connectable to an external network among the plurality of reception devices, and a broadcasting device which broadcasts AV content. In the information processing system, each reception device includes a reception unit that receives path information, which is transmitted from the broadcasting device over a broadcast network, for selecting a path of the internal network according to an amount of passing packets by a packet communication process in the external connection reception device; a selection unit that selects the path at the time of connection to the external network, based on the received path information; and a communication unit that performs communication by being connected to the external network through an external connection reception device according to the amount of passing packets, along the selected path.

The information processing system further includes a first information processing device which manages information of a total amount of passing packets regarding the total amount of passing packets for respective external connection reception devices by the packet communication process, and the external connection reception device transmits the information of the total amount of passing packets to the first information processing device over the external network.

The communication unit transmits information of the total amount of its own passing packets to the first information processing device through the external connection reception device over the external network, at each predetermined period, and the first information processing device determines a usage fee for the external network for the reception device, based on the information of the total amount of passing packets of the external connection reception device and the reception device.

The information processing system further includes a second information processing device that generates a first secret key for encrypting communication performed between the plurality of reception devices connected to the internal network, the reception unit receives a first secret key, which is transmitted from the broadcasting device over the broadcast network on a regular basis and is generated by the second information processing device, and the communication unit encrypts communication with another reception device connected to the internal network, using the received first secret key.

In the information processing system according to the second aspect of the present technology, by each reception device, path information, which is transmitted from the broadcasting device over a broadcast network, for selecting a path of the internal network according to an amount of passing packets by a packet communication process in the external connection reception device is received, the path at the time of connection to the external network is selected based on the received path information, and communication is performed by being connected to the external network through an external connection reception device according to the amount of passing packets, along the selected path.

### Advantageous Effects of Invention

According to the first aspect and the second aspect of the present technology, it is possible to equalize a burden of a usage fee for a connection service to an external network.

### Brief Description of Drawings

[Fig. 1] Fig. 1 is a diagram showing a configuration of an embodiment of an information processing system to which the present technology is applied.
[Fig. 2] Fig. 2 is a diagram showing a configuration example of a broadcasting device.
[Fig. 3] Fig. 3 is a diagram showing a configuration example of a reception device.
[Fig. 4] Fig. 4 is a diagram showing a detailed configuration example of a control unit.
[Fig. 5] Fig. 5 is a diagram showing a configuration example of a key server.
[Fig. 6] Fig. 6 is a diagram showing a configuration example of a monitoring server.
[Fig. 7] Fig. 7 is a diagram showing an outline of an infrastructure-connected mesh network service.
[Fig. 8] Fig. 8 is a flowchart showing a packet transmission process between a plurality of reception devices.
[Fig. 9] Fig. 9 is a diagram showing an outline of common secret key distribution.
[Fig. 10] Fig. 10 is a flowchart showing a common secret key distribution process using a broadcast.
[Fig. 11] Fig. 11 is a sequence diagram showing an outline of a session protection using a common secret key.
[Fig. 12] Fig. 12 is a sequence diagram showing an outline of a session protection using a common secret key.
[Fig. 13] Fig. 13 is a diagram showing an outline of a reporting process of information of the total amount of passing packets.
[Fig. 14] Fig. 14 is a flowchart of a path information distribution process using a broadcast.
[Fig. 15] Fig. 15 is a diagram showing an example of path information.
[Fig. 16] Fig. 16 is a flowchart showing a billing process for the reception device.
[Fig. 17] Fig. 17 is a diagram showing another example of path information.
[Fig. 18] Fig. 18 is a diagram showing a configuration example of a computer.

### Description of Embodiments

Hereinafter, embodiments of the present technology will be described with reference of drawings.

### [Configuration Example of Information Processing System]

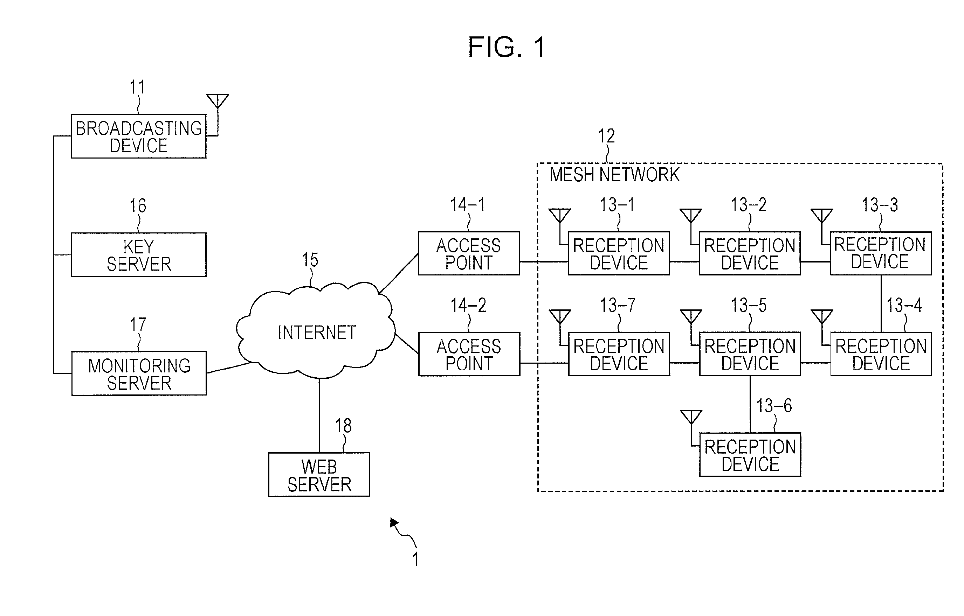

Fig. 1 is a diagram showing a configuration of an embodiment of an information processing system to which the present technology is applied.

The information processing system 1 is an infrastructure-connected mesh network system in which a mesh network 12 and an Internet 15 are connected, and devices connected to the networks can communicate. As shown in Fig. 1, the information processing system 1 includes a broadcasting device 11, reception devices 13-1 to 13-7 constituting the mesh network 12, access points 14-1 and 14-2, Internet 15, a key server 16, a monitoring server 17, and a web server 18.

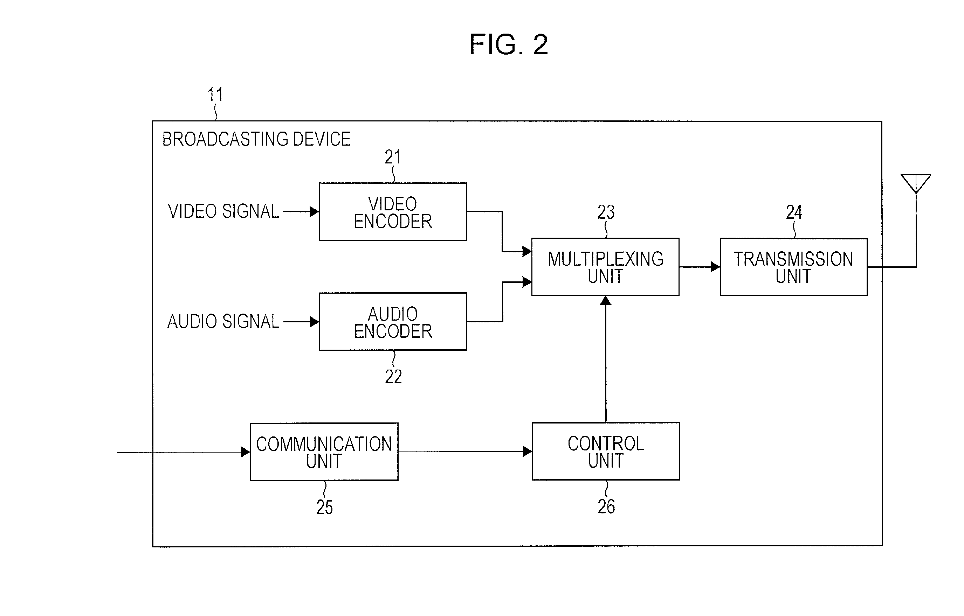

The broadcasting device 11 is provided, for example, by a broadcaster which broadcasts digital television programs. The broadcasting device 11 is intended to broadcast (transmit) digital television broadcast signals of AV content such as digital television programs. In addition, the detailed configuration of the broadcasting device 11 will be described later with reference to Fig. 2.

The mesh network 12 is a network shaped into a mesh of a net by reception devices 13-1 to 13-7 with communication functions such as wireless communication communicating with each other.

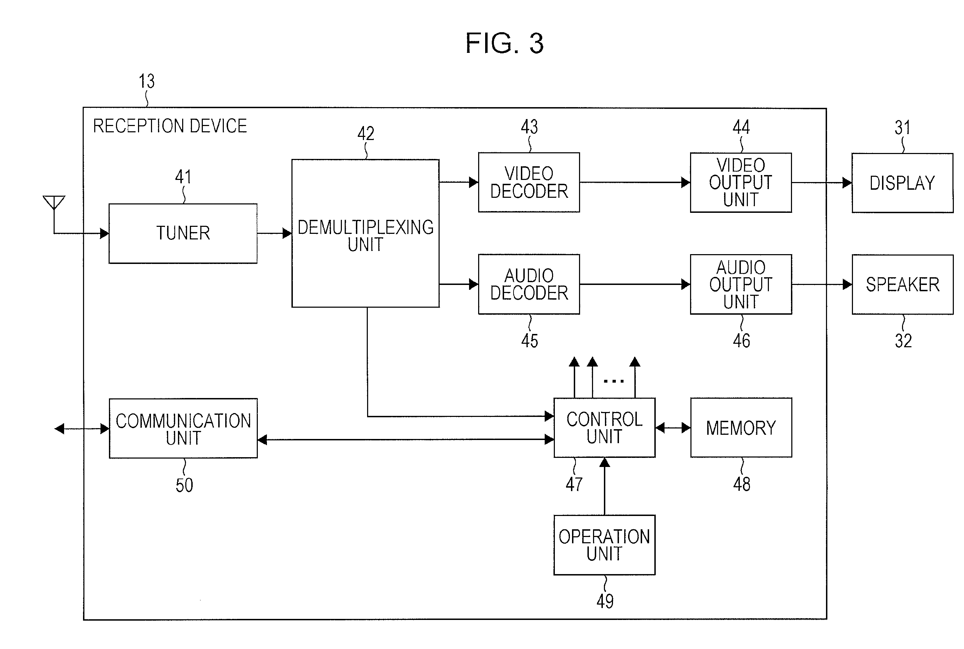

The reception device 13-1 receives digital television broadcast signals which are transmitted from the broadcasting device 11 to obtain images and voices such as digital television programs. The reception device 13-1 outputs the obtained images on a display (display 31 in Fig. 3 to be described later) and outputs voices to a speaker (speaker 32 in Fig. 3 to be described later).

Further, the reception device 13-1 has a communication function such as wireless communication to communicate with other reception devices in the mesh network 12, and as well as is connected to the Internet 15 through an access point 14-1 to communicate with various types of servers such as the key server 16 and the web server 18.

The access point 14-1 is provided by an internet service provider. The access point 14-1 is connected to the Internet 15 through a dedicated line, and connects the reception device 13-1 which has been connected thereto to the Internet 15. In other words, the internet service provider provides a connection service to the Internet 15, and thus collects a predetermined fee depending on the contents of the service from the user using the reception device 13-1.

Hereinafter, a reception device functioning as an Internet Gateway (IGW) is referred to also as an external connection reception device. In other words, in the mesh network 12, the reception devices 13-1 and 13-7 among the reception devices 13-1 to 13-7 are configured as the external connection reception devices. The reception device 13-7 is connected to the Internet 15 through the access point 14-2.

The reception device 13-1 or 13-7 functions as the internet gateway, and thus causes the reception devices 13-2 to 13-6, other than the external connection reception devices in the mesh network 12, to be connected to the Internet 15 through the access point 14-1 or 14-2.

The reception devices 13-2 to 13-6 are configured similar to the reception device 13-1 other than not having a function of the internet gateway. Further, the reception device 13-7 is configured similar to the reception device 13-1.

Further, each of the reception devices 13-1 to 13-7 monitors an amount of passing packets by a packet communication process in each reception device, and accumulates information of a total amount of passing packets regarding the total amount of the amounts of the passing packets. The reception devices 13-1 and 13-7 transmit information of the total amount of passing packets of the reception device 13 to the monitoring server 17 over the Internet 15.

In addition, in the following description, when there is no particular need to distinguish the reception devices 13-1 to 13-7, the reception devices are simply referred to as a reception device 13. Further, the reception device 13 may be a separate body, or may be built in, for example, a television receiver, a video recorder, or the like. Further, the detailed configuration of the reception device 13 will be described later with reference to Fig. 3.

The key server 16 is provided by, for example, a network service provider providing an infrastructure-connected mesh network service. The key server 16 provides a common secret key which is used to encrypt communication performed between reception devices 13 constituting the mesh network 12. The key server 16 generates and encrypts a common secret key so as to be transmitted to the broadcasting device 11. The broadcasting device 11 broadcasts (transmits) as a digital television broadcast signal, an encryption common secret key transmitted from the key server 16. In addition, the encryption common secret key is broadcasted and distributed by carousel transmission or the like.

The reception device 13 receives and decrypts the encryption common secret key which is transmitted as a digital television broadcast signal from the broadcasting device 11, and encrypts communication with other reception devices 13 that are connected to the mesh network 12, using the decrypted common secret key.

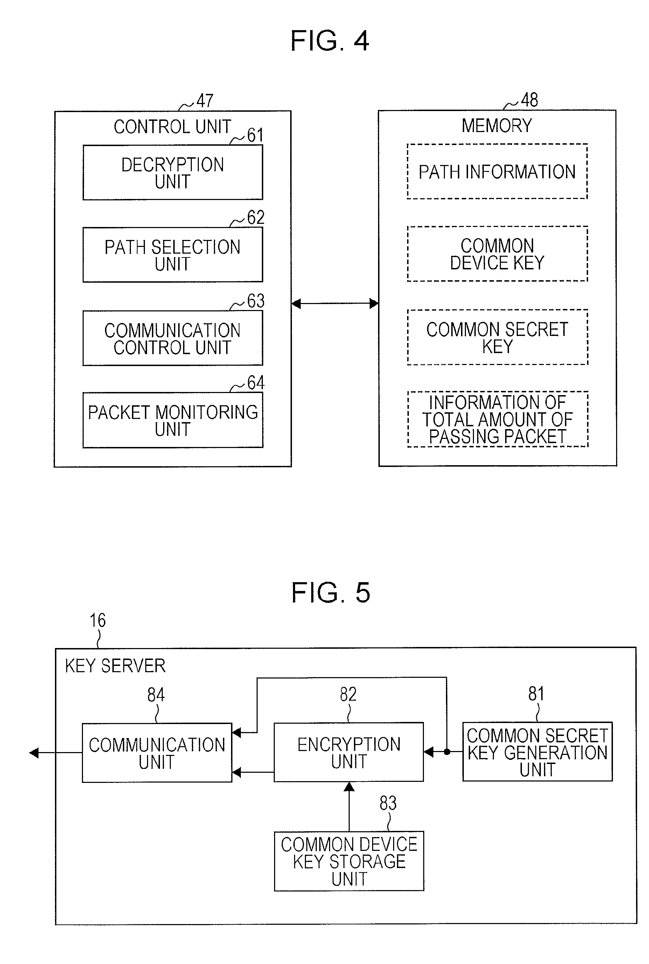

In addition, the detailed configuration of the key server 16 will be described later with reference to Fig. 5.

The monitoring server 17 is provided by, for example, a network service provider providing an infrastructure-connected mesh network service. The monitoring server 17 constantly monitors an amount of passing packets by a packet communication process in the reception device 13 constituting the mesh network 12, and generates path information indicating a path of the mesh network 12 when the reception device 13 is connected to the Internet 15, based on the result of monitoring.

Specifically, the monitoring server 17 receives information of the total amount of passing packets of the reception device 13 constituting the mesh network 12, which are transmitted from the reception devices 13-1 and 13-7, over the Internet 15. The monitoring server 17 generates path information according to the amount of passing packets by the packet communication process in the external connection reception device, based on the information of the total amount of passing packets from the reception devices 13-1 and 13-7. The monitoring server 17 encrypts the generated path information so as to be transmitted to the broadcasting device 11. The broadcasting device 11 broadcasts (transmits) as a digital television broadcast signal, the encryption path information transmitted from the monitoring server 17. In addition, the encryption path information is broadcasted and distributed by a carousel transmission or the like.

The reception device 13 receives and decrypts the encryption path information that is transmitted as the digital television broadcast signal from the broadcasting device 11, and selects a path of the mesh network 12 at the time of connection to the Internet 15, based on the decrypted path information. Then, the reception device 13 is connected to the Internet 15 and performs communication, along the selected path, through an external connection reception device according to the amount of passing packets. Thus, the reception device 13 is able to access, for example, the web server 18 connected to the Internet 15.

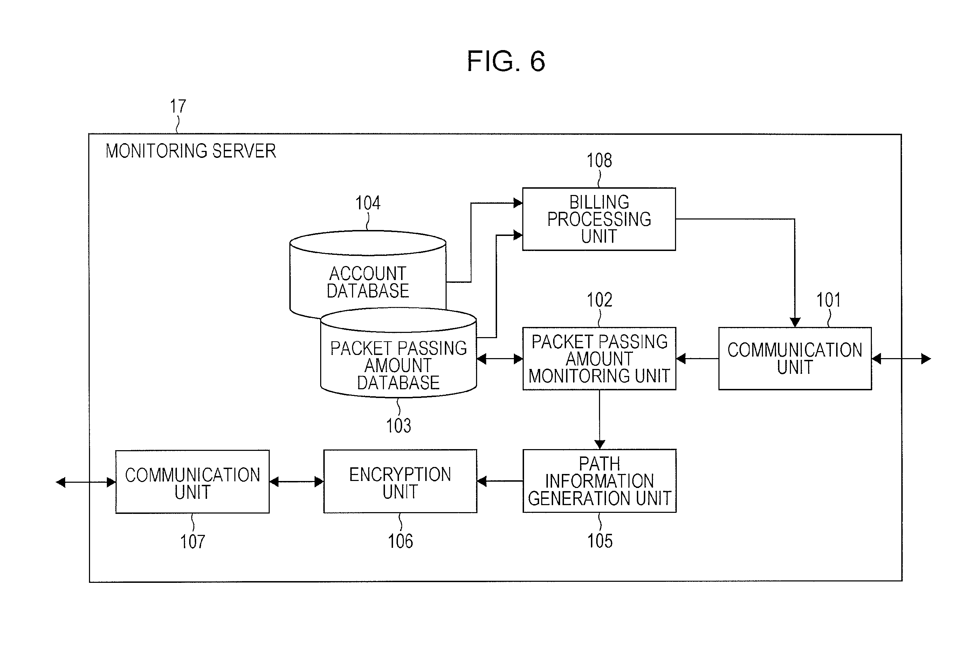

In addition, the detailed configuration of the monitoring server 17 will be described later with reference to Fig. 6.

The web server 18 is a dedicated server providing a predetermined website. The web server 18 provides a desired web page to the reception device 13 which accesses thereto over the Internet 15.

The information processing system 1 is configured as described above.

### [Configuration Example of Broadcasting Device]

Fig. 2 is a diagram showing a configuration example of the broadcasting device 11 in Fig. 1.

The broadcasting device 11 includes a video encoder 21, an audio encoder 22, a multiplexing unit 23, a transmission unit 24, a communication unit 25, and a control unit 26.

The video encoder 21 encodes video signals of AV content such as a digital television program which is input from a previous stage according to a predetermined encoding scheme, and supplies the multiplexing unit 23 with a video stream obtained as a result.

The audio encoder 22 encodes an audio signal corresponding to the video signal which is input to the video encoder 21 according to a predetermined encoding scheme, and supplies the multiplexing unit 23 with an audio stream obtained as a result.

The multiplexing unit 23 is supplied with the video stream from the video encoder 21 and the audio stream from the audio encoder 22. The multiplexing unit 23 multiplexes the video stream and the audio stream, and supplies the transmission unit 24 with a multiplexed stream obtained as a result. Specifically, for example, the video stream and the audio stream are multiplexed into a transport stream (hereinafter, referred to as TS).

The transmission unit 24 broadcasts (transmits) as a digital television broadcast signal, the multiplexed stream which is supplied from the multiplexing unit 23.

The communication unit 25 receives an encryption common secret key transmitted from the key server 16, or encryption path information transmitted from the monitoring server 17 so as to be supplied to the control unit 26. The control unit 26 supplies the multiplexing unit 23 with the encryption common secret key or the encryption path information from the communication unit 25.

When the encryption common secret key or the encryption path information is input from the control unit 26, the multiplexing unit 23 multiplexes the video stream and the audio stream, multiplexes the encryption common secret key or the encryption path information, and then supplies the transmission unit 24 with the multiplexed stream obtained as a result.

The transmission unit 24 transmits as a digital television broadcast signal, the multiplexed stream obtained by multiplexing the encryption common secret key or the encryption path information which is supplied from the multiplexing unit 23.

In addition, in the description described above, although it is assumed that the encryption common secret key or the encryption path information is multiplexed into a multiplexed stream, for example, it is possible to transmit the encryption common secret key or the encryption path information by another method such as embedding the encryption common secret key or the encryption path information into the video stream and audio stream.

The broadcasting device 11 is configured as described above.

### [Configuration Example of Reception Device]

Fig. 3 is a diagram showing a configuration example of the reception device 13 of Fig. 1.

As shown in Fig. 3, the reception device 13 includes a tuner 41, a demultiplexing unit 42, a video decoder 43, a video output unit 44, an audio decoder 45, an audio output unit 46, a control unit 47, a memory 48, an operation unit 49, and a communication unit 50.

The tuner 41 receives the digital television broadcast signal from the broadcasting device 11 through an antenna. The tuner 41 demodulates the digital television broadcast signal corresponding to the channel which is selected by the user, and outputs the TS obtained as a result to the demultiplexing unit 42.

The demultiplexing unit 42 divides the TS which is input from the tuner 41 into a video stream and an audio stream, and respectively outputs the video stream and the audio stream to the video decoder 43 and the audio decoder 45. Further, the demultiplexing unit 42 extracts an encryption common secret key or encryption path information from the TS so as to be supplied to the control unit 47.

The video decoder 43 decodes the video stream which is input from the demultiplexing unit 42, and outputs the video signal obtained as a result to the video output unit 44. The video output unit 44 outputs the video signal which is input from the video decoder 43 to the display 31.

The audio decoder 45 decodes the audio stream which is input from the demultiplexing unit 42, and outputs the audio signal obtained as a result to the audio output unit 46. The audio output unit 46 outputs the audio signal from the audio decoder 45 to the speaker 32.

Thus, the image of AV content is displayed on the display 31 and the corresponding voice is output from the speaker 32, so that a program of the selected channel is viewable. In addition, although the example of Fig. 3 shows an example in which the reception device 13, the display 31 and speaker 32 are configured separately, the display 31 and the speaker 32 may be configured integrally with the reception device 13.

The control unit 47 executes a control program which is stored in advance in the memory 48 to control an operation of each unit of the reception device 13. The control program executed by the control unit 47 is stored in advance in the memory 48. The control program can be updated based on the digital television broadcast signal or the update data which is acquired over the Internet 15. Further, the memory 48 appropriately stores various types of data from the control unit 47. The operation unit 49 receives various types of operations from the user and notifies the control unit 47 of an operation signal corresponding thereto.

Further, the control unit 47 controls the communication unit 50 to communicate with the device which is connected to the mesh network 12 or the Internet 15. Further, the control unit 47 controls the communication unit 50 to monitor an amount of passing packets by a packet communication process, and stores information of a total amount of passing packets regarding the total amount of the amounts of the passing packets in the memory 48, using the decrypted common secret key.

The control unit 47 decrypts an encryption common secret key from the demultiplexing unit 42 to control the communication unit 50, and encrypts communication with another reception device 13 which is connected to the mesh network 12.

Further, the control unit 47 decrypts the encryption path information from the demultiplexing unit 42, and when the reception device 13 of Fig. 3 is not an external connection reception device, the control unit 47 selects the path of the mesh network 12 at the time of connection to the Internet 15, based on the decrypted path information. Then, along the selected path, the reception device 13 controls the communication unit 50 to be connected to the Internet 15 through the external connection reception device according to the amount of passing packets and to access various servers. In contrast, when the reception device 13 of Fig. 3 is an external connection reception device, the control unit 47 controls the communication unit 50 to be directly connected to the Internet 15 through the access point 14 and to access various servers.

In addition, the detailed configuration of the control unit 47 will be described later with reference to Fig. 4.

The reception device 13 is configured as described above.

### [Detailed Configuration Example of Control Unit]

Fig. 4 is a diagram showing a detailed configuration example of the control unit 47 of Fig. 3.

As shown in Fig. 4, the control unit 47 includes a decryption unit 61, a path selection unit 62, a communication control unit 63, and a packet monitoring unit 64.

The decryption unit 61 decrypts an encryption common secret key or encryption path information, which is supplied from the demultiplexing unit 42, using a common device key stored in the memory 48. The common secret key or the path information, which is decrypted by the decryption unit 61, is stored in the memory 48. In addition, the common device key is stored in a predetermined area of the memory 48 of the reception device 13 at the time of manufacturing in a factory.

When the reception device 13 is not an external connection reception device, if the reception device 13 is connected to the Internet 15, the path selection unit 62 selects the path of the mesh network 12 based on the path information which is stored in the memory 48. The path selection unit 62 supplies the communication control unit 63 with the selection result of the path. In addition, although the details will be described later, the path information stored in the memory 48 is appropriately updated.

The communication control unit 63 controls the communication unit 50 to communicate with devices which are connected to the mesh network 12 or the Internet 15. Then, when the reception device 13 is not an external connection reception device, in response to the selection result of the path from the path selection unit 62, the communication control unit 63 controls the communication unit 50 to be connected to the Internet 15 through the external connection reception device according to the amount of passing packets and to access various servers. Further, when the reception device 13 is an external connection reception device, the communication control unit 63 controls the communication unit 50 to be directly connected to the Internet 15 through the access point 14 and to access various servers.

Further, the communication control unit 63 controls the communication unit 50 to encrypt communication with other reception devices 13 that are connected to the mesh network 12, using the common secret key which is stored in the memory 48.

The packet monitoring unit 64 controls the communication unit 50 to respectively monitor an amount of passing packets by a packet communication process, and appropriately updates the information of the total amount of passing packets regarding the amount of passing packets which are stored in the memory 48, according to the monitoring result. This information of the total amount of passing packet may be appropriately read from the memory 48.

The control unit 47 is configured as described above.

In addition, in Fig. 3 and Fig. 4, since the reception devices 13-1 to 13-7 of Fig. 1 have the same configuration, they have been described collectively as the reception device 13 and the control unit 47, but in the following description, if blocks constituting the reception device 13 or the control unit 47 are needed to be distinguished, it is assumed that description will made by denoting respective blocks using reference numerals corresponding to the reception devices 13. Specifically, for example, it is assumed that the reception device 13-1 is configured by a tuner 41-1 to a communication unit 50-1, and the control unit 47-1 is configured by a decryption unit 61-1 to a packet monitoring unit 64-1.

Further, since each function block constituting the control unit 47 is realized by executing the control program which is stored in advance in the memory 48, it is assumed that a program for realizing a function of encrypting a common secret key by the decryption unit 61 will be described as "Key Decryption Module" in the following description of drawings. Further, it is assumed that a program for realizing a function of encrypting communication by the communication control unit 63 and a program for realizing a function of protecting an encrypted session will be described as "Key Management Agent" and "Link Protection Module", respectively. Further, it is assumed that a program for realizing a monitoring function of amount of passing packets in the packet monitoring unit 64 will be described as "Monitoring Agent (MA)".

### [Configuration Example of Key Server]

Fig. 5 is a diagram showing a configuration example of the key server 16 of Fig. 1.

As shown in Fig. 5, the key server 16 includes a common secret key generation unit 81, an encryption unit 82, a common device key storage unit 83, and a communication unit 84.

The common secret key generation unit 81 generates a common secret key so as to be supplied to the encryption unit 82 or the communication unit 84.

The encryption unit 82 encrypts the common secret key supplied from the common secret key generation unit 81 using a common device key read from the common device key storage unit 83 so as to be supplied to the communication unit 84. In addition, common device key storage unit 83 stores in advance a common device key corresponding to the common device key which has been stored in advance in the memory 48 of the reception device 13.

The communication unit 84 transmits an encryption common secret key supplied from the encryption unit 82 to the broadcasting device 11. Further, when a common secret key is supplied from the common secret key generation unit 81, the communication unit 84 transmits the common secret key to the monitoring server 17.

The key server 16 is configured as described above.

### [Configuration Example of Monitoring Server]

Fig. 6 is a diagram showing a configuration example of a monitoring server 17 of Fig. 1.

As shown in Fig. 6, the monitoring server 17 includes a communication unit 101, a passing packet amount monitoring unit 102, a passing packet amount database 103, an account database 104, a path information generation unit 105, an encryption unit 106, a communication unit 107, and a billing processing unit 108.

The communication unit 101 receives information of the total amount of passing packets from the reception devices 13-1 and 13-7 which are external connection reception devices over the Internet 15 so as to be supplied to the passing packet amount monitoring unit 102.

The passing packet amount monitoring unit 102 accumulates the information of total amount of passing packets supplied from the communication unit 101 in the passing packet amount database 103. The passing packet amount monitoring unit 102 constantly monitors the amount of passing packets by the packet communication process in the reception device 13 by appropriately referring to the information of total amount of passing packets accumulated in the passing packet amount database 103. When distribution of path information is performed, the passing packet amount monitoring unit 102 reads out the information of total amount of passing packets accumulated in the passing packet amount database 103 so as to be supplied to the path information generation unit 105.

In addition, user information regarding users who subscribe to an internet service provider and a network service provider is accumulated in the account database 104. The user information of the account database 104 and the information of total amount of passing packets at each reception device 13 of the passing packet amount database 103 are associated with each other.

The path information generation unit 105 generates path information based on the information of total amount of passing packets supplied from the passing packet amount monitoring unit 102 and supplies the generated path information to the encryption unit 106. Further, the communication unit 107 receives a common secret key transmitted from the key server 16 so as to be supplied to the encryption unit 106.

The encryption unit 106 encrypts path information supplied from the path information generation unit 105, using the common secret key supplied from the communication unit 107 so as to be supplied to the communication unit 107.

The communication unit 107 transmits the encryption path information supplied from the encryption unit 106 to the broadcasting device 11.

The billing processing unit 108 reads out the information of total amount of passing packet of the reception device 13 used by the user who subscribes to the internet service provider and the network service provider, from the passing packet amount database 103, based on the user information obtained by referring to the account database 104. The billing processing unit 108 performs a billing process for determining a usage fee for the Internet 15 of the user who uses a reception device 13 (for example, reception device 13-3) other than the external connection reception device, based on the information of total amount of passing packets which is read from the passing packet amount database 103. The billing processing unit 108 supplies the communication unit 101 with usage fee information regarding the usage fee for the user, which is determined by the billing process.

In addition, the billing process is performed at each predetermined period such as one month, when the user is under a contract with, for example, monthly billing.

The communication unit 101 transmits the usage fee information supplied from the billing processing unit 108, to the reception device 13-1 or 13-7 as the external connection reception device, over the Internet 15.

The monitoring server 17 is configured as described above.

### [Infrastructure-connected Mesh Network Service]

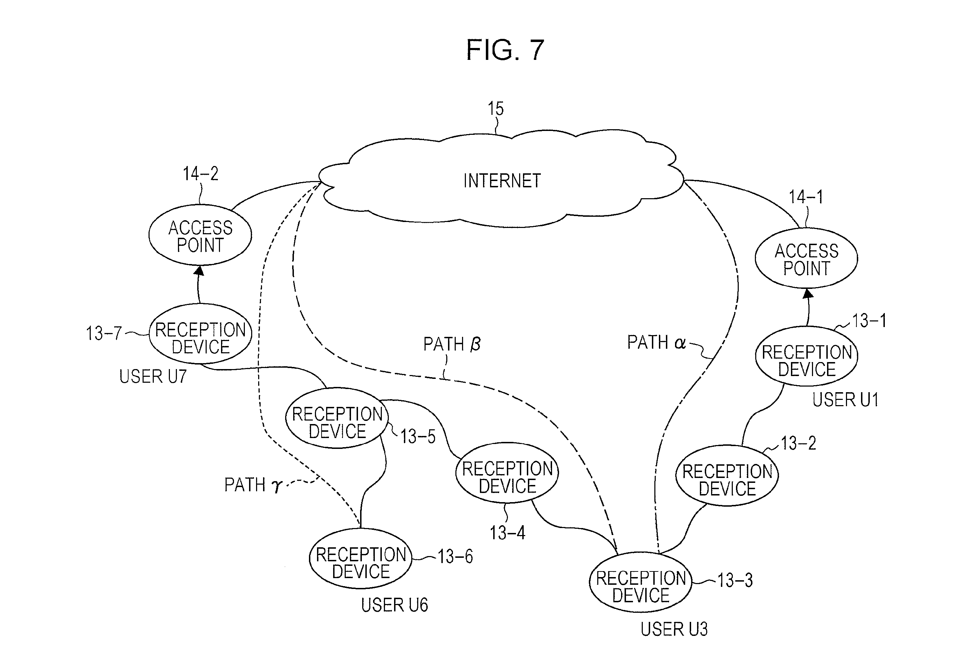

Fig. 7 is a diagram showing an outline of the infrastructure-connected mesh network service.

By the information processing system 1, a network service provider providing the infrastructure-connected mesh network service gives an account to the user who receives the provision of the service. In the example of Fig. 7, respective accounts are given to the user U1, the user U3, the user U6, and the user U7, who respectively uses the reception device 13-1, the reception device 13-3, the reception device 13-6, and the reception device 13-7. Further, the user U1 and the user U7 respectively subscribe to a connection service provided by an internet service provider. Accordingly, the reception devices 13-1 and 13-7 as the external connection reception device can be connected to the Internet 15 through the access point 14.

The users U3 and U6 do not subscribe to the connection service of the internet service provider, but subscribe to the infrastructure-connected mesh network service, so that the reception devices 13-3 and 13-6 can be connected to the Internet 15 through the external connection reception device such as the reception device 13-1 or 13-7 within the mesh network 12.

Although the users U1 and U7 pay the usage fee according to the connection service at each predetermined period to the internet service provider, the users U3 and U6 who do not subscribe to the connection service are not obliged to pay the usage fee for the connection service directly to the internet service provider. Thus, in an infrastructure-connected mesh network service, even the users U3 and U6 are demanded to have a burden of a usage fee for a connection service, depending on a connection state by the reception device 13-3 or 13-6 to the Internet 15 through the reception device 13-1 or 13-7. Specifically, for example, a usage fee for the connection service is to be billed to the user U3 according to the amount of the passing packets received from the reception device 13-3 and the passing packets transmitted to the reception device 13-3 among the amount of the passing packets transmitted and received by the reception device 13-1 in the packet communication process. Then, for example, all or a portion of the usage fee paid by the user U3 is to revert to the user U1 who provides the external connection reception device.

Thus, when there is, for example, enough processing capacity of the packet communication process of the external connection reception device, the users U1 and U7 allow the reception devices 13 of other users to use a portion of the processing capacity, and thus a portion of the usage fee paid to the internet service provider is to revert according to the frequency of use of the Internet 15 of other users. In contrast, although the users U3 and U6 are charged to pay the usage fee according to the frequency of use of the Internet 15, it is possible to construct a connection environment to the Internet 15 at a cheaper cost than the usage fee that the users U3 and U6 should pay when they subscribe to the connection service of the internet service provider.

Further, in the infrastructure-connected mesh network service, communication performed between the reception devices 13 constituting the mesh network 12 is encrypted using a common secret key, so that secure communication is realized. The common secret key is broadcasted over a broadcast distribution network which is different from the mesh network 12, in other words, the common secret key is broadcasted from the broadcasting device 11, so that it is possible to ensure safety of the common secret key.

Further, in the infrastructure-connected mesh network service, when a plurality of external connection reception devices are present in the mesh network 12, path information indicating which path is to be selected is provided to the reception device 13. For example, as shown in Fig. 7, although the reception device 13-3 can select a path α for selecting the reception device 13-1 as the external connection reception device and a path β for selecting the reception device 13-7 as the external connection reception device, it is preferable that a path passing through an external connection reception device having a small amount of passing packets by the packet communication process be selected. In other words, for example, if the path at the time of connection of the reception device 13-3 to the Internet 15 is fixed to the path α, the amount of passing packets of the reception device 13-1 is increased compared to the amount of passing packets of the reception device 13-7, and the usage fee of the user U3 to revert to the users U1 and the user U7 is not distributed fairly. Further, even when the path of the reception device 13-6 is fixed to the path γ for selecting the reception device 13-7 as the external connection reception device, the usage fee of the user U6 that reverts to the user U1 and the user U7 is not distributed fairly.

Therefore, in the infrastructure-connected mesh network service, path information for selecting a path according to the amount of passing packets of the external connection reception device is provided to the reception device 13, for example, the path α or the path β is selected by the reception device 13-3, so that a bias does not occur in the amount of passing packets of the external connection reception device. As a result, the usage fee to revert to the user of the external connection reception device is distributed fairly, so that it is possible to equalize a burden of a usage fee of a connection service to the external network. Further, the path information is broadcasted over a broadcast distribution network which is different from the mesh network 12, in other words, the path information is broadcasted from the broadcasting device 11, so that it is possible to ensure safety of path information.

In addition, although there is a method of notifying the reception devices 13 constituting the mesh network 12 of the reception device 13 which is the external connection reception device, it is possible to adopt, for example, a method shown below. In other words, in the example of Fig. 7, the reception device 13-1 notifies the adjacent reception device 13-2 of the fact that it is the external connection reception device. The reception device 13-2 notifies the reception device 13-3 of the fact that the connection to the reception device 13-1 which is the external connection reception device is possible through itself. In the same manner, the reception device 13-7 notifies of the adjacent reception device 13-5 of the fact that it is the external connection reception device. The reception device 13-5 notifies the reception devices 13-4 and 13-6 of the fact that the connection to the reception device 13-7 which is the external connection reception device is possible through itself. The reception device 13-4 notifies the fact that the connection to the reception device 13-7 which is the external connection reception device is possible through itself and the reception device 13-5. Thus, the reception device 13-3 can recognize the path α or the path β as the path for connection to the Internet 15.

The services described above are provided in the infrastructure-connected mesh network service. In the following description, contents of more specific services will be described.

### [Packet Transmission Process]

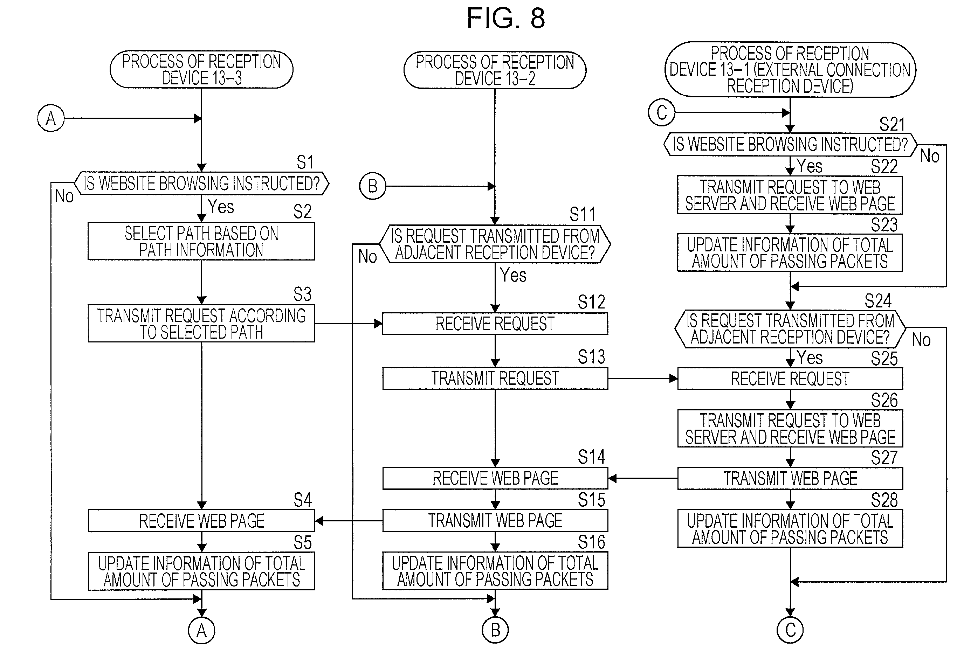

First, a packet transmission process performed among the plurality of reception devices 13 constituting the mesh network 12 will be described with reference to the flowchart of Fig. 8. In addition, Fig. 8 describes as an example, a case in which the reception device 13-3 is connected to the Internet 15 from the reception device 13-1 which is the external connection reception device through the path α of Fig. 7.

When the user U1 operates the browser to instruct a website browsing ("Yes" in S21), the communication control unit 63-1 controls the communication unit 50-1, and the reception device 13-1 is connected to the Internet 15 through the access point 14-1. Then, the communication control unit 63-1 transmits a request to the web server 18 over the Internet 15, and receives a web page in response to the request (S22). Thus, a desired web page according to the operation of the user U1 is displayed on the browser on the display 31-1.

In step S23, the packet monitoring unit 64-1 updates information of total amount of passing packet which is stored in the memory 48-1, according to the amount of passing packets which are transmitted and received in a series of packet communication processes in the website browsing by the user U1.

As described above, the reception device 13-1 which is an external connection reception device is directly connected to the Internet 15 and is able to receive a desired web page. In contrast, the reception device 13-3 which is not the external connection reception device is connected to the Internet 15 through the external connection reception device.

In step S1, the control unit 47-3 determines whether or not a website browsing is instructed by the user U3 operating the browser, based on an operation signal from the operation unit 49-3.

In step S1, when it is determined that the website browsing is instructed, the process proceeds to step S2. In step S2, the communication control unit 63-3 controls the communication unit 50-3 to transmit a request for the desired web page to the reception device 13-2, according to the path α which is selected from the path information stored in the memory 48-3 (S3).

In the reception device 13-2, if the request is transmitted from the adjacent reception device 13-3 ("Yes" in S11), the communication control unit 63-2 controls the communication unit 50-2 to receive the request from the adjacent reception device 13-3 (S12). The communication control unit 63-2 controls the communication unit 50-2 to transmit the received request to the reception device 13-1 (S13).

In the reception device 13-1, if the request is transmitted from the adjacent reception device 13-2 ("Yes" in S24), the communication control unit 63-1 controls the communication unit 50-1 to receive the request from the adjacent reception device 13-2 (S25). The communication control unit 63-1 controls the communication unit 50-1 to be connected to the Internet 15 through the access point 14-1. Then, communication control unit 63-1 transmits the request to the web server 18 over the Internet 15, and receives the web page according to the request (S26).

In step S27, the communication control unit 63-1 controls the communication unit 50-1 to transmit the received web page to the reception device 13-2. Further, in step S28, the packet monitoring unit 64-1 updates the information of total amount of passing packet which is stored in the memory 48-1, according to an amount of passing packets which are transmitted and received in a series of packet communication processes in the website browsing by the user U3.

In the reception device 13-2, if the web page is transmitted from the reception device 13-1, the communication control unit 63-2 controls the communication unit 50-2 to receive the web page (S14) and to transmit the web page to the reception device 13-3 (S15). Further, in step S16, the packet monitoring unit 64-2 updates the information of total amount of passing packets, which is stored in the memory 48-2, according to an amount of passing packets which are transmitted and received in a series of packet communication processes in the website browsing by the user U3.

In the reception device 13-3, if the web page is transmitted from the reception device 13-2, the communication control unit 63-2 controls the communication unit 50-2 to receive the web page (S4). Thus, the desired web page according to the operation of the user U3 is displayed on the browser on the display 31-3. Further, in step S5, the packet monitoring unit 64-3 updates the information of total amount of passing packet which is stored in the memory 48-3, according to an amount of passing packets which are transmitted and received in a series of packet communication processes in the website browsing by the user U3.

As described above, while the reception device 13-1 of the user U1 who subscribes to the connection service of an internet service provider is directly connected to the Internet 15, the reception device 13-3 of the user U3 who does not subscribe to the connection service of an internet service provider is connected to the Internet 15 through the reception device 13-1, and obtains a web page from the web server 18. Further, at this time, in each reception device 13, the amount of passing packets which have been transmitted and received in the packet communication process is held as information of total amount of passing packets. The information of total amount of passing packets, which is held in each reception device 13, is used in the path information distribution process and the billing process which will be described later.

### [Common Secret Key Distribution]

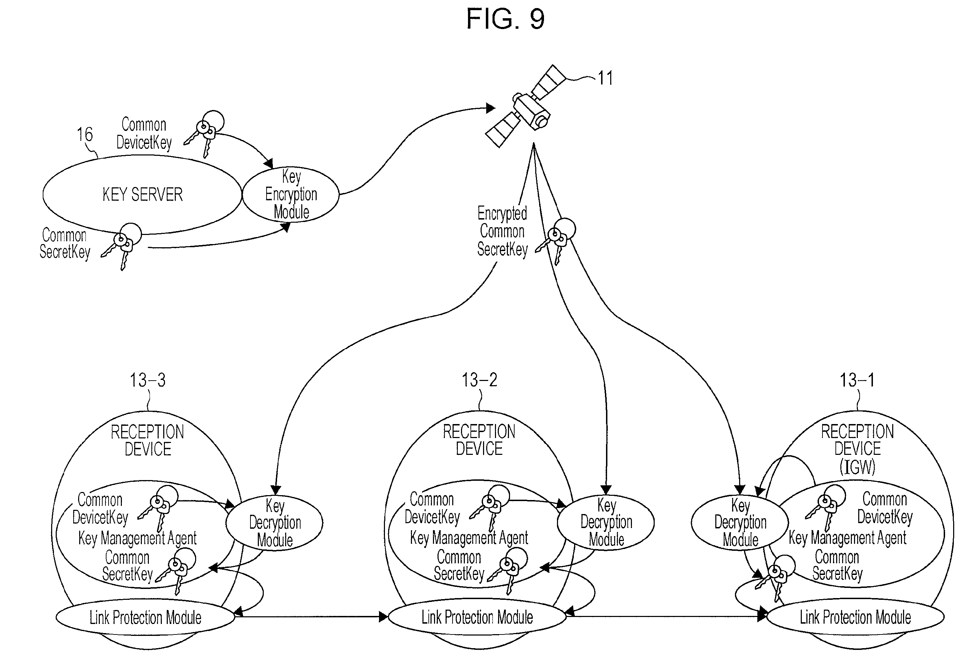

Next, a common secret key distribution will be described with reference to Fig. 9 to Fig. 12. Fig. 9 is a diagram showing an outline of the common secret key distribution.

As described above, in the information processing system 1, communication performed between the reception devices 13 constituting the mesh network 12 is encrypted using a secret key which is broadcasted from the broadcasting device 11 to realize secure communication.

As shown in Fig. 9, in the key server 16, the encryption unit 82 encrypts a common secret key using the common device key, and the communication unit 84 transmits the encryption common secret key to the broadcasting device 11. The broadcasting device 11 distributes the encryption common secret key from the key server 16 over a broadcast. A distribution time of the encryption common secret key is set to, for example, a predetermined time interval such as an interval of a few seconds, an interval of a few minutes, an interval of a few hours, and an interval of a few days.

The reception devices 13-1 to 13-3 respectively receive encryption common secret keys from the broadcasting device 11. In the reception devices 13-1 to 13-3, the encryption common secret key distributed from the broadcasting device 11 is decrypted by the decryption unit 61 using the common device key. Thus, the reception devices 13-1 to 13-3 respectively obtain common secret keys. Then, if the communication unit 50 establishes mutual wireless communication with another reception device 13 according to the control of the communication control unit 63, the reception devices 13-1 to 13-3 perform an authentication by the obtained common secret key and encrypt the wireless communication.

In this manner, although the encrypted communication using a common secret key is performed in the mesh network 12, the common secret key is distributed over a broadcast distribution network which is different from the mesh network 12 or the Internet 15, in other words, the common secret key is distributed by a broadcast, so that it is possible to ensure safety in the distribution of the common secret key. Further, if the size of the group of the reception devices 13 constituting the mesh network 12 becomes significantly large, the cost for sharing the secret key is increased, but if the common secret key is distributed by a broadcast, the common secret key can be distributed regardless of the size of the group, so that it is possible to reduce the cost for sharing the secret key.

In addition, although the encrypted communication which is performed in the reception devices 13-1 to 13-3 among the reception devices 13-1 to 13-7 constituting the mesh network 12 is described as an example in the description of Fig. 9 in order to simplify the description, the same encrypted communication is performed in the other reception devices 13.

### [Common Secret Key Distribution Process Using Broadcast]

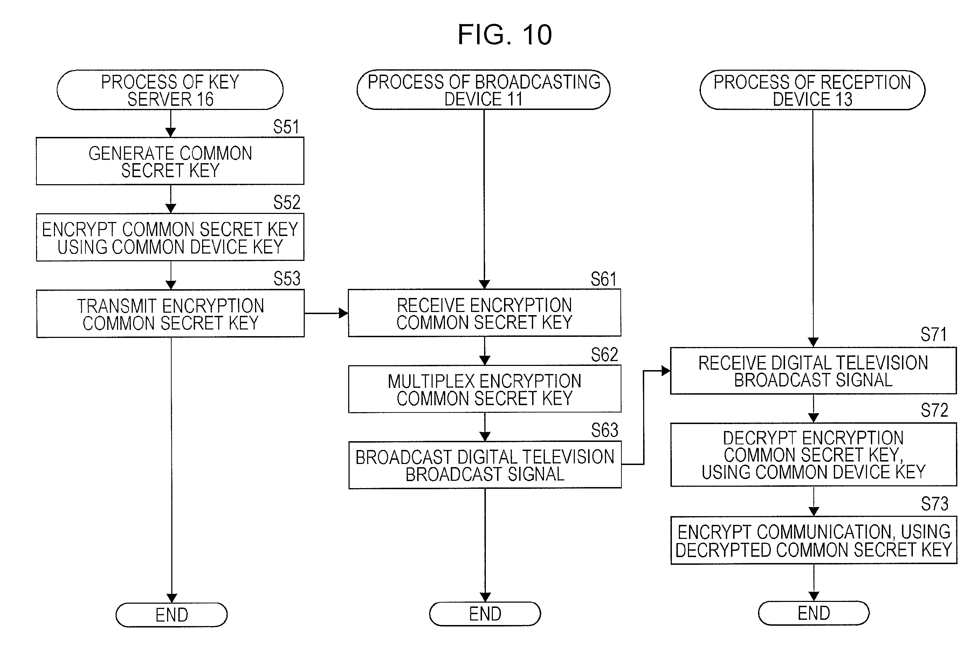

Next, the common secret key distribution will be described more specifically. Fig. 10 is a flowchart showing a common secret key distribution process using a broadcast.

The key server 16 transmits the generated common secret key to the broadcasting device 11 by repeatedly performing the process of steps S51 to S53 on a regular basis. Specifically, in step S51, the common secret key generation unit 81 generates a common secret key. In step S52, the encryption unit 82 encrypts the common secret key generated by the common secret key generation unit 81 using the common device key which is read from the common device key storage unit 83. In step S53, the communication unit 84 transmits the encryption common secret key which is encrypted by the encryption unit 82, to the broadcasting device 11.

If the encryption common secret key is transmitted from the key server 16, the broadcasting device 11 distributes the encryption common secret key by a broadcast by performing the process of step S61 to S63. Specifically, in step S61, the communication unit 25 receives the encryption common secret key from the key server 16. In step S62, the multiplexing unit 23 multiplexes the encryption common secret key received from the communication unit 25 into a video stream and an audio stream according to the control of the control unit 26. In step S63, the transmission unit 24 transmits the multiplexed stream from the multiplexing unit 23, as a digital television broadcast signal.

If the digital television broadcast signal is transmitted from the broadcasting device 11, the reception device 13 obtains the common secret key by performing the process of step S71 to S73 and encrypts wireless communication by performing an authentication by the common secret key when wireless communication is established with other reception devices 13 constituting the mesh network 12.

Specifically, in step S71, the tuner 41 receives the digital television broadcast signal from the broadcasting device 11 through an antenna. In step S72, the decryption unit 61 decrypts the encryption common secret key obtained from the digital television broadcast signal, using the common device key stored in the memory 48. In step S73, the communication control unit 63 encrypts wireless communication by performing an authentication by the common secret key decrypted by the decryption unit 61, when wireless communication is established with other reception devices 13.

Hitherto, the common secret key distribution process has been described.

### [Session Protection Using Common Secret Key]

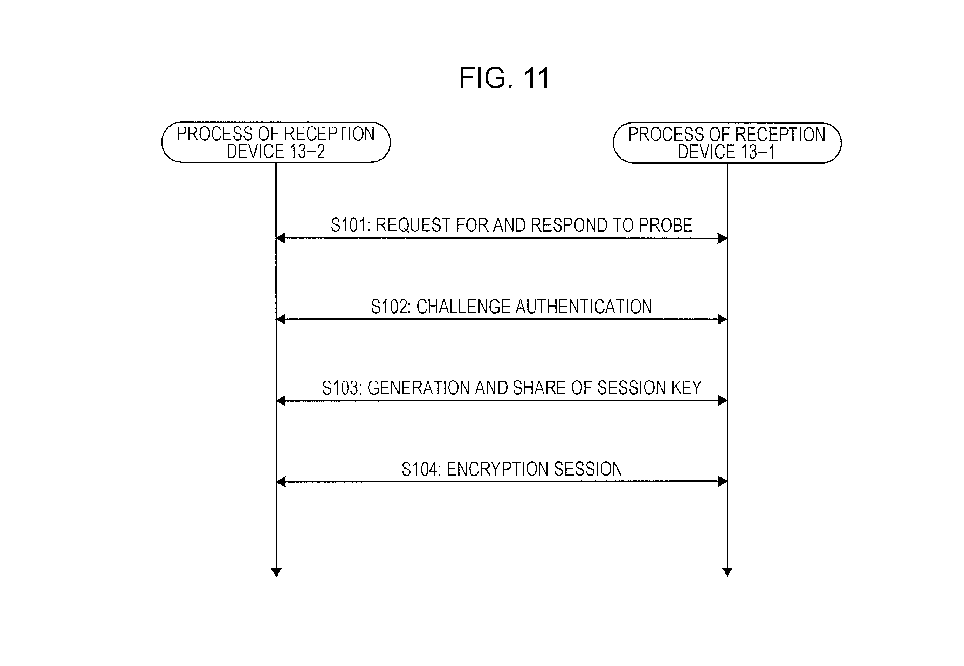

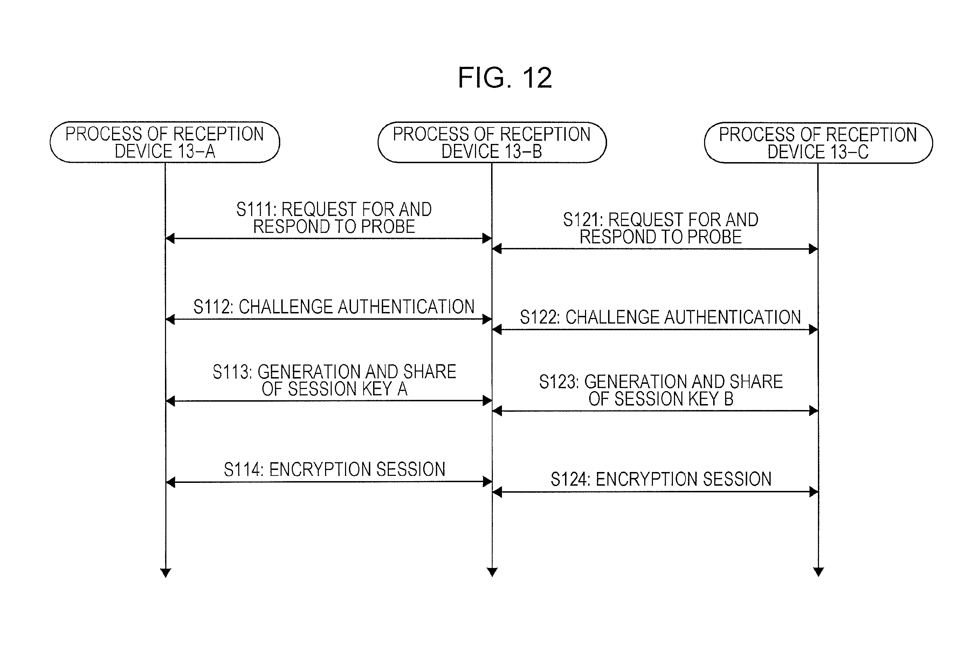

Next, the encrypted communication performed between the reception devices 13 will be described more specifically. Fig. 11 and Fig. 12 are sequence diagrams showing an outline of a session protection using a common secret key.

As shown in Fig. 11, when the reception device 13-1 as an external connection reception device and the reception device 13-2 perform an encrypted communication, if the reception device 13-2 transmits a probe request, in response thereto, the reception device 13-1 returns a probe response (S101). Further, the reception device 13-1 and the reception device 13-2 perform a challenge authentication (S102), and when the authentication is successful, a session key which is enabled in the session is generated and shared (S103). Thus, from when an encryption session is started until the session is ended, in the reception device 13-1 and the reception device 13-2, a session key is used at the time of exchanging messages (S104). Thus, the session is protected. Further, as described above, the session key used in the encryption session is updated on a regular basis by the common secret key which is distributed on a regular basis by the common secret key distribution process of Fig. 10.

Further, as shown in Fig. 12, it is assumed that a plurality of external connection reception devices are present among a plurality of reception devices 13 constituting the mesh network 12, and the external connection reception devices behave as normal reception devices 13 or external connection reception devices. In the example of Fig. 12, the reception device 13-A operates as a normal reception device 13 for the reception device 13-B. Further, the reception device 13-B operates as an external connection reception device for the reception device 13-A, and operates as a normal reception device 13 for the reception device 13-C. Further, the reception device 13-C operates as the external connection reception device for the reception device 13-B.

In this case, in the reception device 13-A and the reception device 13-B, similar to Fig. 11, a probe request and a probe response are exchanged (S111), a challenge authentication is performed (S112), and when the challenge authentication is successful, a session key A which is valid in the session of these reception devices is generated and shared (S113). In contrast, even in the reception device 13-B and the reception device 13-C, similar to Fig. 11, a probe request and a probe response are exchanged (S121), a challenge authentication is performed (S122), and when the challenge authentication is successful, a session key B which is enabled in the session of these reception devices is generated and shared (S123). Thus, an encryption session is started in each of a pair of the reception device 13-A and the reception device 13-B, and a pair of the reception device 13-B and the reception device 13-C, the session keys are used at the time of exchanging messages, and thus each session is protected (S114 and S124). Further, similar to Fig. 11, the session key used in each encryption session is updated on a regular basis by a common secret key which is distributed by the common secret key distribution process of Fig. 10 on a regular basis.

As described above, the common secret key, which is used in the encrypted communication performed between the reception devices 13 constituting the mesh network 12, is distributed over a broadcast, without passing through the mesh network 12 or the Internet 15 in which there is a concern of falsification of the common secret key, so that it is possible to improve safety at the time of distribution of the common secret key.

### [Path Information Distribution]

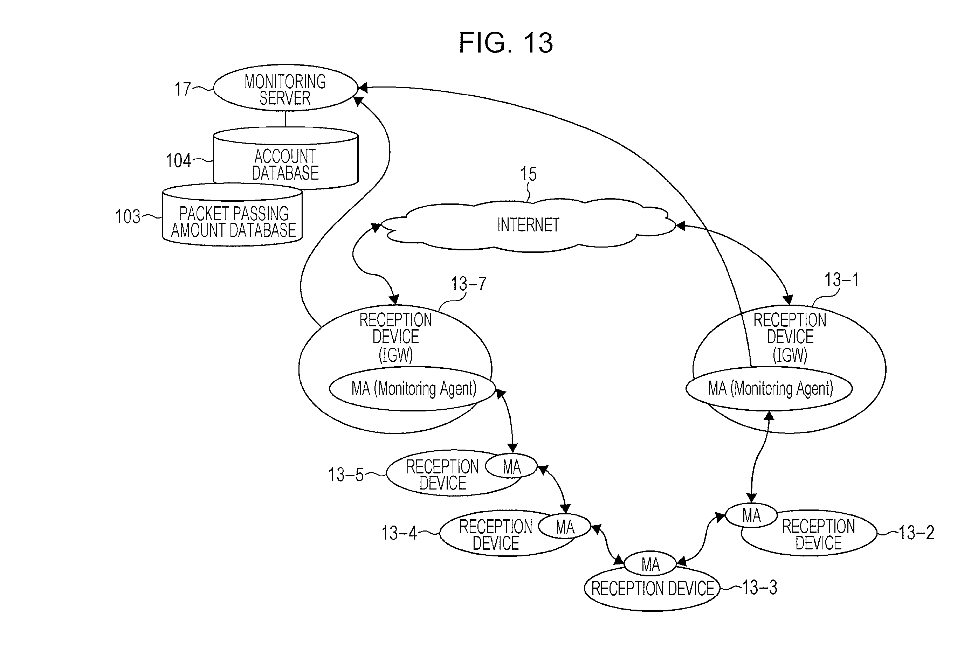

Next, the path information distribution will be described with reference to Fig. 13 to Fig. 15.

As described above, in the information processing system 1, path information for selecting a path according to an amount of passing packets of the external connection reception devices constituting the mesh network 12 is provided to the reception device 13, so that the user fee which reverts to the user who subscribes to the connection service is fair. The path information is distributed over a broadcast in order to secure safety, but it is generated based on the information of total amount of passing packets accumulated in each reception device 13. In other words, each of the reception devices 13 constituting the mesh network 12 reports the information of total amount of its own passing packets to the monitoring server 17 through the Internet 15, the monitoring server 17 can generate path information or can perform a billing process for determining usage fee for the Internet 15 for the reception device 13.

Fig. 13 is a diagram showing an outline of a reporting process of information of total amount of passing packets.

As shown in Fig. 13, the packet monitoring units 64-1 to 64-7 of the reception devices 13-1 to 13-7 are connected to the Internet 15 through the external connection reception devices, and transmit each piece of information of total amount of passing packets to the monitoring server 17. Specifically, the reception device 13-3 transmits information of total amount of passing packets to the adjacent reception devices 13-2 and 13-4. The reception device 13-2 transmits information of total amount of passing packets of the reception device 13-3 in addition to the information of total amount of its own passing packets, to the reception device 13-1. The reception device 13-1 transmits information of total amount of passing packets of the reception devices 13-2 and 13-3 in addition to the information of total amount of its own passing packets, to the monitoring server 17 over the Internet 15.

Further, the reception device 13-4 transmits information of total amount of passing packets of the reception device 13-3 in addition to the information of total amount of its own passing packets, to the reception device 13-5. The reception device 13-5 transmits information of total amount of passing packets of the reception devices 13-3 and 13-4 in addition to the information of total amount of its own passing packets, to reception device 13-7. The reception device 13-7 transmits information of total amount of passing packets of the reception devices 13-3 to 13-5 in addition to information of total amount of its own passing packets, to the monitoring server 17 over the Internet 15.

Thus, the monitoring server 17 can accumulate the information of total amount of passing packets of the reception devices 13 constituting the mesh network 12 in the passing packet amount database 103. Then, the monitoring server 17 generates path information based on the information of total amount of passing packets accumulated in the passing packet amount database 103.

### [Path Information Distribution Process Using Broadcast]

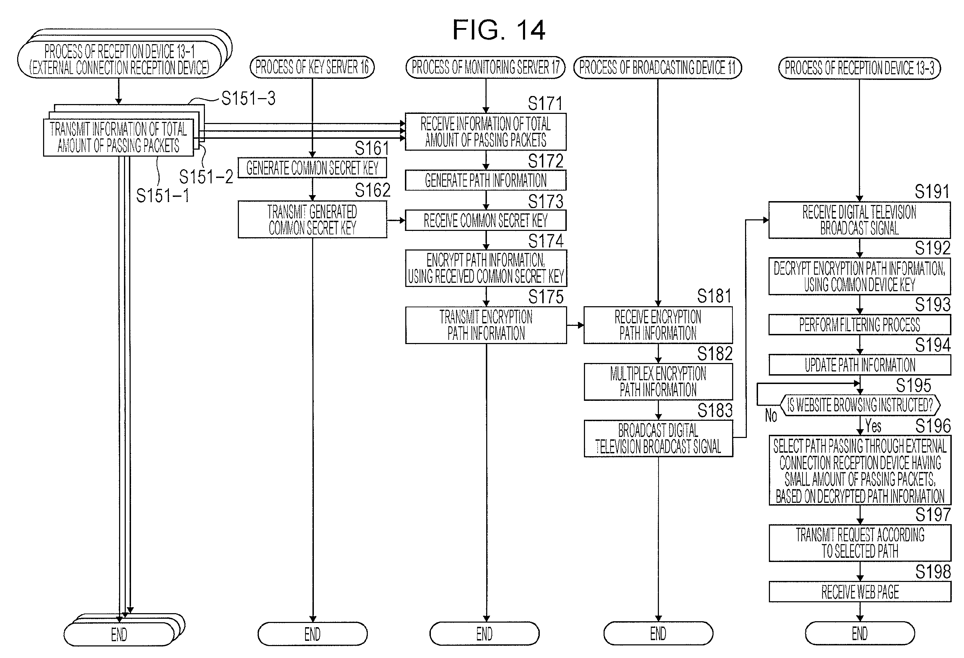

Next, the path information distribution process using a broadcast will be described with reference to the flowchart of Fig. 14.

The packet monitoring unit 64 of the external connection reception device such as the reception devices 13-1 and 13-7 controls the communication unit 50 to transmit the information of total amount of passing packet stored in the memory 48 to the monitoring server 17 over the Internet 15 (S151-1, S151-2, ...). Further, the key server 16 transmits a common secret key generated by repeatedly performing the process of step S161 and S162 on a regular basis, to the monitoring server 17. In addition, the secret key which is generated here is the same as the secret key which is generated in step S51 of Fig. 10.

If information of total amount of passing packets is transmitted from a plurality of external connection reception devices, the monitoring server 17 transmits encryption path information to the broadcasting device 11 by performing the process of steps S171 to S175. Specifically, in step S171, the communication unit 101 receives the information of total amount of passing packets from the plurality of external connection reception devices. The received information of total amount of passing packets is accumulated in the passing packet amount database 103 by the passing packet amount monitoring unit 102. In step S172, the path information generation unit 105 generates path information based on the information of total amount of passing packets, which is read from the passing packet amount database 103 by the passing packet amount monitoring unit 102.

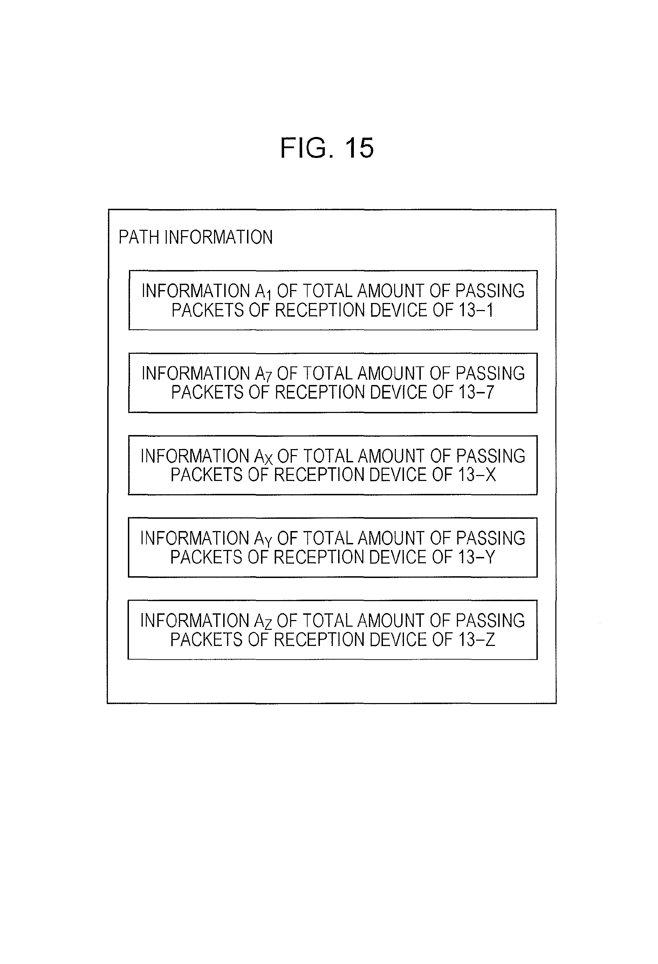

Fig. 15 is a diagram showing an example of path information.

As shown in Fig. 15, information of total amount of passing packets of the external connection reception devices such as the reception devices 13-1 and 13-7 is described in the path information. In the example of Fig. 15, as path information, information A_{X}, A_{Y}, and A_{Z} of total amount of passing packets of the external connection reception devices such as the reception devices 13-X to 13-Z (not shown) is described, in addition to information A₁ and A₇ of total amount of passing packets of the reception devices 13-1 to 13-7.

Returning to the flowchart of Fig. 14, in step S173, the communication unit 107 receives the common secret key from the key server 16. In step S174, the encryption unit 106 encrypts the path information generated by the path information generation unit 105, using the common secret key received by the communication unit 107. In step S175, the communication unit 107 transmits the encryption path information which is encrypted by the encryption unit 106, to the broadcasting device 11.

If the encryption path information is transmitted from the key server 16, the broadcasting device 11 distributes the encryption path information by a broadcast by performing the process of steps S181 to S183. In steps S181 to S183, similar to steps S61 to S63 of Fig. 10, the encryption path information from the key server 16 is multiplexed into a video stream and an audio stream, and transmitted as a digital television broadcast signal. In addition, although the digital television broadcast signal is received by all the reception devices 13 constituting the mesh network 12, in the description of Fig. 14, the reception device 13-3 will be described as a representative in order to simplify the description.

If the digital television broadcast signal is transmitted from the broadcasting device 11, the reception device 13-3 obtains new path information by performing the process of steps S191 to S198, but if connection to the Internet 15 is made, a path is selected according to the path information.

Specifically, in steps S191 and S192, similar to steps S71 and S72 of Fig. 10, a digital television broadcast signal from the broadcasting device 11 is received by a tuner 41-3, and the path information obtained from the digital television broadcast signal is decrypted by the decryption unit 61-3 using the common device key. In step S193, the path selection unit 62-3 performs a filtering process on the decrypted path information. In the filtering process, only information about the external connection reception device to which the reception device 13-3 is reachable is extracted. For example, when the reception device 13-3 obtains path information of Fig. 15, the external connection reception device to which the reception device 13-3 is reachable is only the reception devices 13-1 and 13-7, so that the information A_{X} to A_{Z} of total amount of passing packets of the other reception devices 13-X to 13-Z is excluded from path information.

In addition, although a determination is made as to whether or not the reception device 13 is a reachable external connection reception device, the path selection unit 62-3 may determine that the external connection reception device which is recognized in advance as a connectable external connection reception device is reachable, based on, for example, the notification from the adjacent reception device 13, and may determine that the other external connection reception devices are unreachable.

If the filtering process is ended, the process proceeds to step S194. In step S194, the path selection unit 62-3 stores the path information which is subjected to the filtering process of step S193 in the memory 48-3 to update the path information.

In the reception device 13-3, when the user U3 operates the browser to instruct a website browsing ("Yes" in S195), in step S196, the path selection unit 62-3 selects a path passing through an external connection reception device having a small amount of passing packets, based on the path information stored in the memory 48-3. Specifically, when the path information of Fig. 15 is stored in the memory 48-3, the path selection unit 62-3 selects an external connection reception device having a small amount of passing packets, according to the information of total amount of passing packets of the reception devices 13-1 and 13-7, which is extracted by the filtering process of step S193. For example, when the amount of passing packets of the reception device 13-7 is smaller than the amount of passing packets of the reception device 13-1, the communication control unit 63-3 controls the communication unit 50-3 to transmit a request by a path β (Fig. 7) (s197). Then, as described in Fig. 8, the request transmitted from the reception device 13-3 reaches the reception device 13-7 through the reception devices 13-4 and 13-5.

The reception device 13-7 is connected to the Internet 15 through the access point 14-2 and transmits the request from the reception device 13-3 to a web server 18 over the Internet 15 to receive a web page according to the request. The reception device 13-7 transmits the web page received from the web server 18 to the reception device 13-3 through the reception devices 13-5 and 13-4. Thus, the reception device 13-3 receives the web page obtained by the reception device 13-7 accessing the web server 18 over the Internet 15 (S198), and a desired web page is displayed on the browser on the display 31-3 in response to the operation of the user U3.

As described above, since the path connected to the Internet 15 from the external connection reception device having a small amount of passing packets is selected as the path of the reception device 13 constituting the mesh network 12, averaging the amount of passing packets passing through the external connection reception device enables a fair distribution of the usage fees of other users which are to revert to the user of the external connection reception device. As a result, it is possible to maintain fairness of a usage fee burden for a connection service of an internet service provider with respect to the user who subscribes to the infrastructure-connected mesh network service.

Further, although the reception devices 13 constituting the mesh network 12 perform communication along the path based on path information, the path information is distributed over a broadcast distribution network which is different from the mesh network 12 or the Internet 15, in other words, the path information is distributed by a broadcast, so that it is possible to ensure safety in the distribution of the path information. In addition, when the path information is distributed using the mesh network 12, if the traffic of the mesh network 12 is increased, congestion occurs to delay the update of path information, and thus it is considered that the reliability of the information of total amount of passing packets included in the path information is reduced. In contrast, when the path information is distributed over a broadcast, the update of the path information is not delayed, so that it is possible to maintain the reliability of the path information.

### [Billing Process for Reception Device]

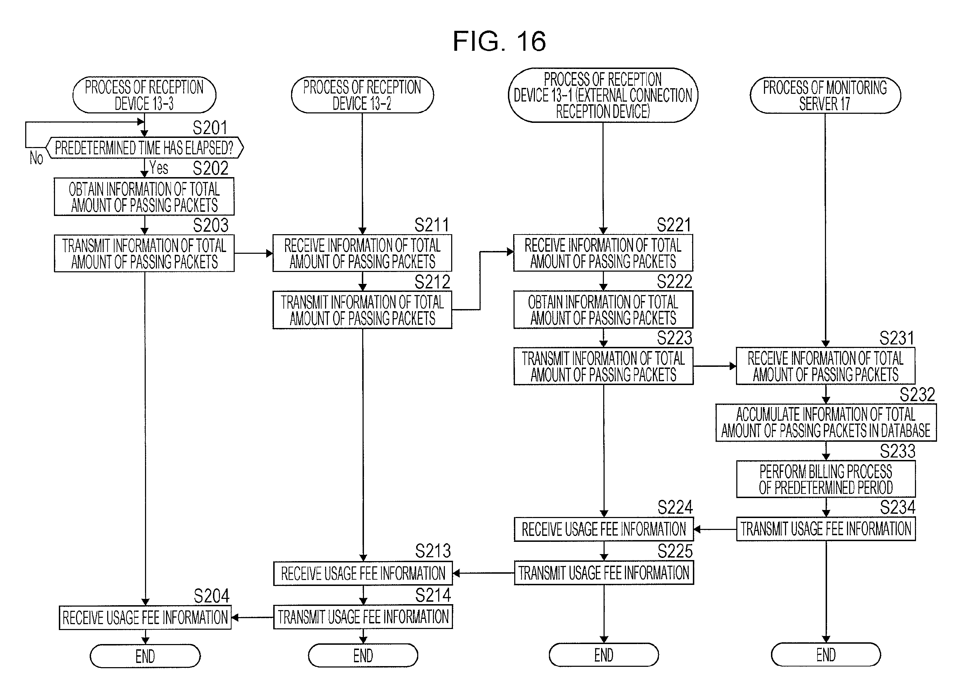

Next, a billing process for determining a usage fee for the Internet 15 for the reception device 13 will be described with reference to the flowchart of Fig. 16.

In the reception device 13-3, the packet monitoring unit 64-3 determines whether or not a predetermined period such as one month of the case where the user U3 is under contract with, for example, monthly billing has elapsed (S201). The packet monitoring unit 64-3 waits for the elapse of a predetermined period such as one month, and reads and acquires the information of total amount of passing packets stored in the memory 48-3 (S202). In step S203, the communication control unit 63-3 controls the communication unit 50-3 to transmit the information of total amount of passing packets, to the reception device 13-2 (S203).

If the information of total amount of passing packets is transmitted from the reception device 13-3, the reception device 13-2 transmits the information of total amount of passing packets from the reception device 13-3, to the reception device 13-1 by performing the process of steps S211 and S212. The process of steps S211 and S212 is the same as the process of steps S12 and S13 of Fig. 8.

If the information of total amount of passing packets is transmitted from the reception device 13-2, the reception device 13-1 transmits the information of total amount of passing packets from the reception device 13-2 and information of total amount of its own passing packets to the monitoring server 17 over the Internet 15, by performing the process of steps S221 to S223. The process of steps S221 to S223 is the same as the process of steps S25 and S26 of Fig. 8.

If the information of total amount of passing packets is transmitted from the reception device 13-1, the monitoring server 17 determines a usage fee for the Internet 15 for the reception device 13-3 by performing the process of steps S231 to S234. Specifically, in step S231, the communication unit 101 receives the information of total amount of passing packets from the reception device 13-1. In step S232, the passing packet amount monitoring unit 102 accumulates information of total amount of passing packets of the reception device 13-1 and the reception device 13-3, which is received by the communication unit 101, in the passing packet amount database 103.

In step S233, the billing processing unit 108 performs a billing process for a predetermined period, with reference to the passing packet amount database 103 and the account database 104. Specifically, the billing processing unit 108 reads out the information of total amount of passing packets of the reception device 13-1 used by the user U1 and the information of total amount of passing packets of the reception device 13-3 used by the user U3, from the passing packet amount database 103, based on the user information obtained with reference to the account database 104. Then, the billing processing unit 108 performs a billing process for determining a usage fee of the user U3 for the Internet 15, based on the information of total amount of passing packets, which is read from the passing packet amount database 103.

Here, the user U1 subscribes to the connection service of the internet service provider and the infrastructure-connected mesh network service of network service provider, and the user U3 subscribes only to the infrastructure-connected mesh network service. For example, in the billing process, a ratio of the amount of passing packets indicating the information of total amount of passing packets of the reception device 13-3 with respect to the amount of passing packets indicating the information of total amount of passing packets of the reception device 13-1 is obtained, and the usage fee for the connection service of the internet service provider according to the ratio is determined as the usage fee for the user U3.

In step S234, the communication unit 101 transmits the usage fee information which is determined by the billing process by the billing processing unit 108 to the reception device 13-1 over the Internet 15.

If the usage fee information is transmitted from the monitoring server 17, the reception device 13-1 receives the usage fee information from the monitoring server 17 by performing steps S224 and S225 so as to be transmitted to the reception device 13-2. The process of steps S224 and S225 is the same as the process of steps S26 and S27 of Fig. 8.

If the usage fee information is transmitted from the reception device 13-1, the reception device 13-2 receives the usage fee information from the reception device 13-1 by performing the process of steps S213 and S214 so as to be transmitted to the reception device 13-3. The process of steps S213 and S214 is the same as the process of steps S14 and S15 of Fig. 8.

If the usage fee information is transmitted from the reception device 13-2, the reception device 13-3 receives the usage fee information from the reception device 13-2 in step S204. Thus, the user U3 can confirm the usage fee to be paid to the network service provider to which the user U3 subscribes.

As described above, for example, a path for the connection of the reception device 13-3 to the Internet 15 is not fixed and dynamically changed depending on the amounts of passing packets of the reception device 13-1 and the reception device 13-7 which are external connection reception devices, it is possible to avoid the connection from the reception device 13-3 from biasing to one external connection reception device. As a result, it is possible to distribute a usage fee for user U3 which is to revert to the user U1 and user U7. Further, although the user U3 pays the usage fee according to the amount of passing packets of the reception device 13-3 with respect to the amount of passing packets of the external connection reception device, it is possible to construct a connection environment to the Internet 15 with a cheaper usage fee compared to a case where the user himself or herself subscribes to the internet service provider.

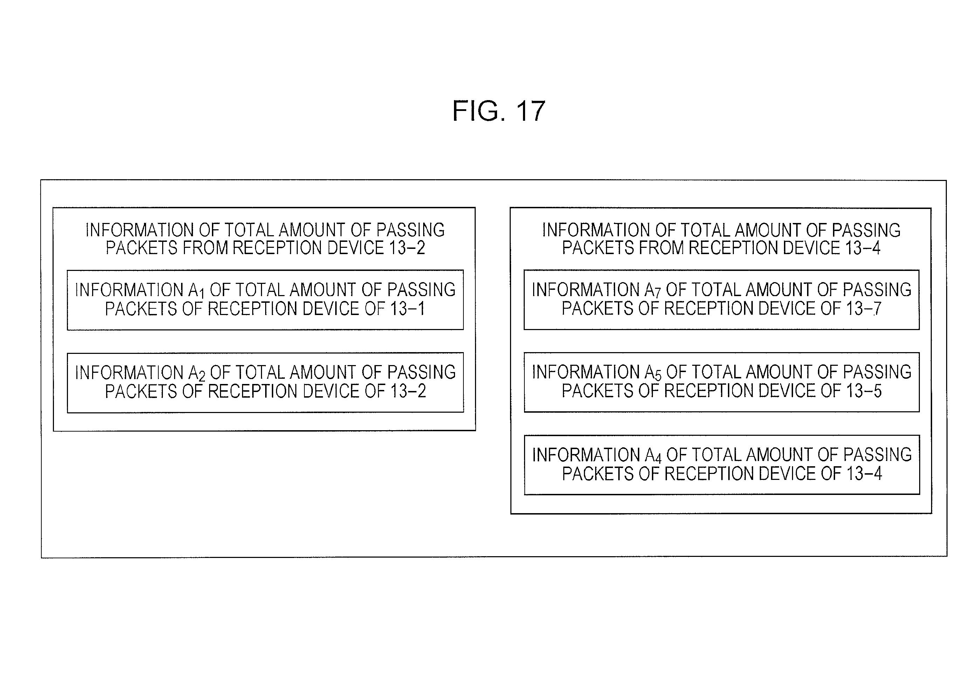

In addition, although the path information distribution using a broadcast is described in the description described above, if a band within the mesh network 12 can be ensured reliably, a path information distribution may be performed using the mesh network 12. For example, since each of the plurality of reception devices 13 constituting the mesh network 12 transmits the information of total amount of passing packets to the adjacent reception device 13, path information can be distributed. Specifically, the reception device 13-1 transmits the information of total amount of its own passing packets to the adjacent reception device 13-2. The reception device 13-2 transmits the information of total amount of passing packets of the reception device 13-1 in addition to the information of total amount of its own passing packets to the adjacent reception device 13-3. Thus, as shown in Fig. 17, the reception device 13-3 can obtain the information A₁ and A₂ of total amount of passing packets of the reception devices 13-1 and 13-2. In addition, in a similar manner, each of the reception devices 13-4, 13-5, and 13-7 transmits the information of total amount of passing packets to the adjacent reception device 13, so that the reception device 13-3 can obtain the information A₄, A₅, and A₇ of total amount of passing packets of the reception devices 13-4, 13-5, and 13-7. Then, the reception device 13-3 may select a path passing through an external connection reception device having a small amount of passing packets, using the obtained information of total amount of passing packets.

Further, although a case in which the information of total amount of passing packets is distributed as path information is described in the description above, it is possible to distribute, for example, path information adopting another policy, such as improving reliability of the mesh network 12 by selecting preferentially the external connection reception device which is energized constantly and operated stably. In order to preferentially select the external connection reception device which is operated stably, for example, the key server 16 may constantly monitor a routing module which is mounted in the external connection reception device and distribute path information for selecting a path including an external connection reception device having a routing module which is likely to be constantly energized.

Further, although the common key encryption scheme is described as an encryption scheme in the description described above, for example, other encryption schemes such as a public key encryption scheme may be employed. However, when the secret key is distributed using a broadcast, the possibility is extremely small in which the secret key is changed during distribution or information is stolen by someone, the common key encryption scheme is employed, so that it is possible to speed up the process executed by each reception device 13, as compared to, for example, a public key encryption scheme.

### [Description of Computer Adopting the Present Technology]

A series of processes described above may be executed by hardware, or may be executed by software. When the series of processes are executed by software, programs constituting the software are installed in a computer. Herein, the computer includes a computer built in dedicated hardware, for example, a general personal computer capable of executing various types of functions by various types of program being installed, or the like.

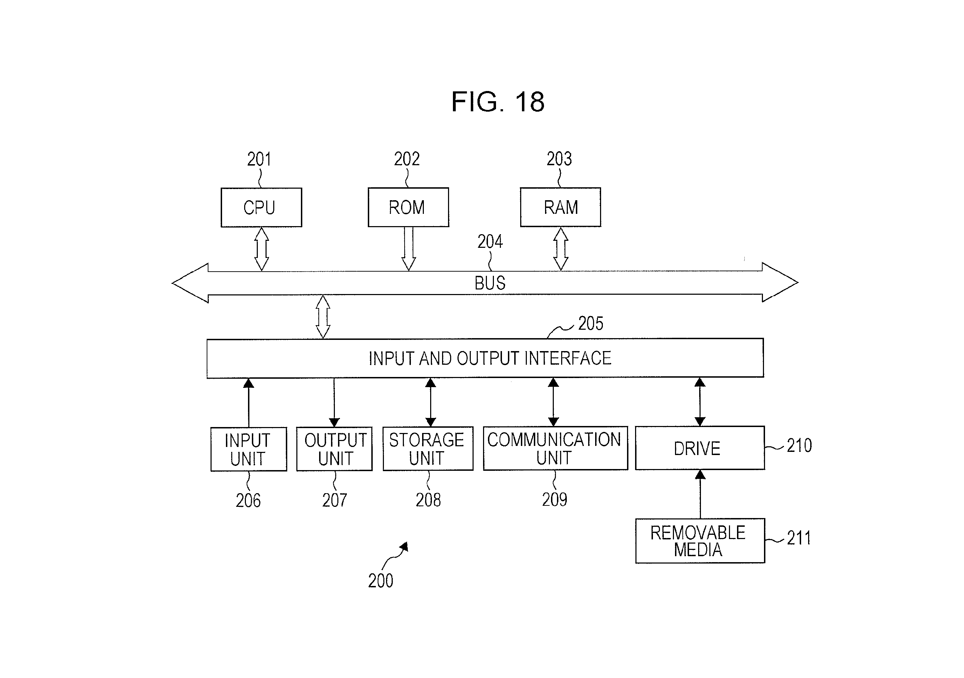

Fig. 18 is a block diagram showing a configuration example of hardware of a computer executing a series of processes described above by a program.

In the computer 200, a Central Processing Unit (CPU) 201, a Read Only Memory (ROM) 202, and a Random Access Memory (RAM) 203 are mutually connected by a bus 204.

An input and output interface 205 is connected to the bus 204. An input unit 206, an output unit 207, a storage unit 208, a communication unit 209, and a drive 210 are connected to the input and output interface 205.

The input unit 206 includes a keyboard, a mouse, a microphone, and the like. The output unit 207 includes a display, a speaker, and the like. The storage unit 208 includes a hard disk, a nonvolatile memory, and the like. A communication unit 209 includes a network interface, and the like. The drive 210 drives a removable medium 211 such as a magnetic disk, an optical disk, and a magneto-optical disk.

In a computer 200 which is configured as described above, the CPU201 loads onto a RAM 203 and performs, for example, a program stored in a storage unit 208 through an input and output interface 205 and a bus 204 so as to perform a series of processes described above.

The program executed by the computer 200 (CPU 201) may be provided by being recorded in a removable medium 211, for example, as a package media. Further, the program may be provided through a wired or wireless transmission medium such as a local area network, the Internet, and a digital satellite broadcast.

In the computer 200, the program may be installed in the storage unit 208 through the input and output interface 205, by mounting the removable medium 211 in the drive 210. Further, the program is received in the communication unit 209 through a wired or wireless transmission medium, and installed in the storage unit 208. In addition, the program may be installed in advance in the ROM 202 or the storage unit 208.

In addition, the program executed by the computer 200 may be a program in which process is executed in a temporal sequence along the order described in the present specification, or a program in which process is executed in parallel, or at a necessary timing such as a time when is called.

Here, in the present specification, process steps describing a program for executing various processes in the computer 200 are not necessarily needed to be processed in a temporal sequence along the order described in the flowchart, but include a process which is executed in parallel or separately (for example, a parallel process or a process by an object).

Further, a program may be processed by a single computer, or may be shared and processed by a plurality of computers. Further, a program may be one that is transmitted to and executed in a remote computer.

Further, in the present specification, the system means a set of a plurality of configuration components (devices, modules (products), and the like), and it does not matter whether all configuration components are in the same housing. Accordingly, both a plurality of devices each of which is housed in a separate housing and which are connected over a network and a single device in which a plurality of modules are housed in a single housing are systems.

In addition, the embodiments of the present technology are not limited to the embodiments described above, but may be modified in various ways without departing from the spirit and scope of the present technology.

For example, the present technology may adopt a configuration of a cloud computing in which one function is shared and is processed in a collaborative manner by a plurality of devices over a network.

Further, each step described in the above flowcharts may be shared and performed by a plurality of devices, as well as performed in a single device.

Further, when the plurality of processes are included in one step, the plurality of processes included in the one step may be shared and performed by a plurality of devices, as well as performed in a single device.

In addition, the present technology may have the following configurations.

### (1)

A reception device, each of a plurality of the reception devices being connected by an internal network, the device including:
a reception unit that receives path information, which is transmitted over a broadcast network, for selecting a path of the internal network according to an amount of passing packets by a packet communication process in an external connection reception device which is connectable to an external network among the plurality of reception devices;
a selection unit that selects the path at the time of connection to the external network, based on the received path information; and
a communication unit that performs communication by being connected to the external network through an external connection reception device according to the amount of passing packets, along the selected path.

### (2)

The reception device according to (1),
in which the selection unit selects the path passing through an external connection reception device having the smallest amount of passing packets, among the plurality of the external connection reception devices, based on the received path information.

### (3)

The reception device according to (1) or (2),
in which the path information includes information of total amount of passing packets regarding a total amount of passing packets for respective external connection reception devices by the packet communication process.

### (4)

The reception device according to (3),
in which when the reception device is the external connection reception device, the communication unit transmits the information of total amount of its own passing packets, over the external network, to an information processing device which manages the information of total amount of passing packets for respective external connection reception devices.

### (5)

The reception device according to (4),
in which the reception unit receives the path information which is transmitted over the broadcast network based on the information of total amount of passing packets which is managed in the information processing device.

### (6)

The reception device according to (4) or (5),
in which when the reception device is not the external connection reception device, the communication unit transmits the information of total amount of its own passing packets to the information processing device through the external connection reception device over the external network at each predetermined period, and
in which the information processing device determines a usage fee for the external network for the reception device, based on the information of total amount of passing packets of the external connection reception device and the reception device.

### (7)

The reception device according to any one of (1) to (6),
in which the reception unit receives a first secret key, which is transmitted over the broadcast network on a regular basis, for encrypting communication performed between the plurality of reception devices which are connected to the internal network, and
in which the communication unit encrypts communication with another reception device connected to the internal network, using the received first secret key.

### (8)

The reception device according to (7),
in which the first secret key is encrypted by a common key encryption scheme, and
in which the communication unit encrypts communication with another reception device, using the first secret key obtained through decoding by a second secret key which is used in encryption of the first secret key.

### (9)

The reception device according to any one of (1) to (8), in which the reception unit receives AV content which is transmitted over the broadcast network.

### (10)

The reception device according to any one of (1) to (9), in which the internal network is a mesh network or an ad hoc network, and
in which the external network is the Internet.

### (11)

A reception method of each of a plurality of reception devices being connected by an internal network, the reception method causing each reception device to perform steps of:
receiving path information, which is transmitted over a broadcast network, for selecting a path of the internal network according to an amount of passing packets by a packet communication process in an external connection reception device which is connectable to an external network among the plurality of reception devices;
selecting the path at the time of connection to the external network, based on the received path information; and
performing communication by being connected to the external network through an external connection reception device according to the amount of passing packets, along the selected path.

### (12)

A program causing a computer to function as:
a reception unit that receives path information, which is transmitted over a broadcast network, for selecting a path of the internal network according to an amount of passing packets by a packet communication process in an external connection reception device which is connectable to an external network among the plurality of reception devices being connected by an internal network;
a selection unit that selects the path at the time of connection to the external network, based on the received path information; and
a communication unit that performs communication by being connected to the external network through an external connection reception device according to the amount of passing packets, along the selected path.

### (13)

An information processing system comprising a plurality of reception devices connected by an internal network, an external connection reception device which is connectable to an external network among the plurality of reception devices, and a broadcasting device which broadcasts AV content,
in which each reception device includes:
receiving path information, which is transmitted from the broadcasting device over a broadcast network, for selecting a path of the internal network according to an amount of passing packets by a packet communication process in the external connection reception device;
a selection unit that selects the path at the time of connection to the external network, based on the received path information; and
a communication unit that performs communication by being connected to the external network through an external connection reception device according to the amount of passing packets, along the selected path.

### (14)

The information processing system according to (13), further comprising:
a first information processing device which manages information of total amount of passing packets regarding a total amount of passing packets for respective external connection reception devices by the packet communication process,
in which the external connection reception device transmits the information of total amount of passing packets to the first information processing device over the external network.

### (15)

The information processing system according to (14),
in which the communication unit transmits information of total amount of its own passing packets to the first information processing device through the external connection reception device over the external network, at each predetermined period, and
in which the first information processing device determines a usage fee for the external network for the reception device, based on the information of total amount of passing packets of the external connection reception device and the reception device.

### (16)

The information processing system according to any one of (13) to (15), further comprising:
a second information processing device that generates a first secret key for encrypting communication performed between the plurality of reception devices connected to the internal network,
in which the reception unit receives a first secret key, which is transmitted from the broadcasting device over the broadcast network on a regular basis and is generated by the second information processing device, and
in which the communication unit encrypts communication with another reception device connected to the internal network, using the received first secret key.

### Reference Signs List

- 1: INFORMATION PROCESSING SYSTEM
- 11: BROADCASTING DEVICE
- 12: MESH NETWORK
- 13-1 TO 13-7, 13: RECEPTION DEVICE
- 15: INTERNET
- 16: KEY SERVER
- 17: MONITORING SERVER
- 18: WEB SERVER
- 41: TUNER
- 47: CONTROL UNIT
- 48: MEMORY
- 50: COMMUNICATION UNIT
- 61: DECRYPTION UNIT
- 62: PATH SELECTION UNIT
- 63: COMMUNICATION CONTROL UNIT
- 64: PACKET MONITORING UNIT
- 200: COMPUTER
- 201: CPU

## Claims

1. A reception device, each of a plurality of the reception devices being connected by an internal network, the device comprising:
a reception unit that receives path information, which is transmitted over a broadcast network, for selecting a path of the internal network according to an amount of passing packets by a packet communication process in an external connection reception device which is connectable to an external network among the plurality of reception devices;
a selection unit that selects the path at the time of connection to the external network, based on the received path information; and
a communication unit that performs communication by being connected to the external network through an external connection reception device according to the amount of passing packets, along the selected path.

2. The reception device according to Claim 1,
wherein the selection unit selects the path passing through an external connection reception device having the smallest amount of passing packets, among the plurality of the external connection reception devices, based on the received path information.

3. The reception device according to Claim 2,
wherein the path information includes information of total amount of passing packets regarding a total amount of passing packets for respective external connection reception devices by the packet communication process.

4. The reception device according to Claim 3,
wherein when the reception device is the external connection reception device, the communication unit transmits the information of total amount of its own passing packets, over the external network, to an information processing device which manages the information of total amount of passing packets for respective external connection reception devices.

5. The reception device according to Claim 4,
wherein the reception unit receives the path information which is transmitted over the broadcast network based on the information of total amount of passing packets which is managed in the information processing device.

6. The reception device according to Claim 4,
wherein when the reception device is not the external connection reception device, the communication unit transmits the information of total amount of its own passing packets to the information processing device through the external connection reception device over the external network at each predetermined period, and
wherein the information processing device determines a usage fee for the external network for the reception device, based on the information of total amount of passing packets of the external connection reception device and the reception device.

7. The reception device according to Claim 1,
wherein the reception unit receives a first secret key, which is transmitted over the broadcast network on a regular basis, for encrypting communication performed between the plurality of reception devices which are connected to the internal network, and
wherein the communication unit encrypts communication with another reception device connected to the internal network, using the received first secret key.

8. The reception device according to Claim 7,
wherein the first secret key is encrypted by a common key encryption scheme, and
wherein the communication unit encrypts communication with another reception device, using the first secret key obtained through decryption by a second secret key which is used in encryption of the first secret key.

9. The reception device according to Claim 1,
wherein the reception unit receives AV content which is transmitted over the broadcast network.

10. The reception device according to Claim 1,
wherein the internal network is a mesh network or an ad hoc network, and
wherein the external network is Internet.

11. A reception method of each of a plurality of reception devices being connected by an internal network, the reception method causing each reception device to perform steps of:
receiving path information, which is transmitted over a broadcast network, for selecting a path of the internal network according to an amount of passing packets by a packet communication process in an external connection reception device which is connectable to an external network among the plurality of reception devices;
selecting the path at the time of connection to the external network, based on the received path information; and
performing communication by being connected to the external network through an external connection reception device according to the amount of passing packets, along the selected path.

12. A program causing a computer to function as:
a reception unit that receives path information, which is transmitted over a broadcast network, for selecting a path of the internal network according to an amount of passing packets by a packet communication process in an external connection reception device which is connectable to an external network among the plurality of reception devices being connected by an internal network;
a selection unit that selects the path at the time of connection to the external network, based on the received path information; and
a communication unit that performs communication by being connected to the external network through an external connection reception device according to the amount of passing packets, along the selected path.

13. An information processing system comprising a plurality of reception devices connected by an internal network, an external connection reception device which is connectable to an external network among the plurality of reception devices, and a broadcasting device which broadcasts AV content,
wherein each reception device includes:
a reception unit that receives path information, which is transmitted from the broadcasting device over a broadcast network, for selecting a path of the internal network according to an amount of passing packets by a packet communication process in the external connection reception device;
a selection unit that selects the path at the time of connection to the external network, based on the received path information; and
a communication unit that performs communication by being connected to the external network through an external connection reception device according to the amount of passing packets, along the selected path.

14. The information processing system according to Claim 13, further comprising:
a first information processing device which manages information of total amount of passing packets regarding a total amount of passing packets for respective external connection reception devices by the packet communication process,
wherein the external connection reception device transmits the information of total amount of passing packets to the first information processing device over the external network.

15. The information processing system according to Claim 14,
wherein the communication unit transmits information of total amount of its own passing packets to the first information processing device through the external connection reception device over the external network, at each predetermined period, and
wherein the first information processing device determines a usage fee for the external network for the reception device, based on the information of total amount of passing packets of the external connection reception device and the reception device.

16. The information processing system according to Claim 13, further comprising:
a second information processing device that generates a first secret key for encrypting communication performed between the plurality of reception devices connected to the internal network,
wherein the reception unit receives a first secret key, which is transmitted from the broadcasting device over the broadcast network on a regular basis and is generated by the second information processing device, and
wherein the communication unit encrypts communication with another reception device connected to the internal network, using the received first secret key.
